(19) Europäisches Patentamt
European Patent Office
Office européen des brevets

(11) **EP 2 844 702 B1**

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(51) Int Cl.:
*C09C 1/00* (2006.01)  *C09D 5/16* (2006.01)
*C09D 5/36* (2006.01)  *C09D 7/40* (2018.01)

(21) Anmeldenummer: **13718865.2**

(22) Anmeldetag: **30.04.2013**

(86) Internationale Anmeldenummer:
**PCT/EP2013/059019**

(87) Internationale Veröffentlichungsnummer:
**WO 2013/164352 (07.11.2013 Gazette 2013/45)**

(54) **PLÄTTCHENFÖRMIGES EFFEKTPIGMENT UMFASSEND EINE KUPFERHALTIGE BESCHICHTUNG VERFAHREN ZU DESSEN HERSTELLUNG UND VERWENDUNG DESSELBEN**

PLATE-SHAPED EFFECT PIGMENT COMPRISING A COATING CONTAINING COPPER METHOD FOR THE PRODUCTION THEREOF AND USE THEREOF

PIGMENT À EFFET EN FORME DE PAILLETTES COMPRENANT UN REVÊTEMENT À BASE DE CUIVRE SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2012 DE 102012103903**

(43) Veröffentlichungstag der Anmeldung:
**11.03.2015 Patentblatt 2015/11**

(73) Patentinhaber: **Eckart GmbH**
**91235 Hartenstein (DE)**

(72) Erfinder:
• GRÜNER, Michael
**91275 Auerbach (DE)**
• KAUPP, Günter
**91284 Neuhaus (DE)**
• VOIT, Thomas
**91275 Auerbach (DE)**
• SCHUMACHER, Dirk
**91257 Pegnitz (DE)**
• GIPP, Andreas
**90453 Nürnberg (DE)**

(74) Vertreter: **Louis Pöhlau Lohrentz**
**Patentanwälte**
**Postfach 30 55**
**90014 Nürnberg (DE)**

(56) Entgegenhaltungen:
EP-A1- 1 479 730    EP-A1- 2 246 395
WO-A2-01/60628    US-B1- 6 616 745

• "Kapitel 1.6.4: Korrosionsinhibitoren, Korrosionsschutzpigmente und- additive" In: Bodo Müller und Ulrich Poth: "Lackformulierung und Lackrezeptur: Das Lehrbuch für Ausbildung und Praxis (2. überarbeitete Auflage)", 2005, Vincentz Verlag, Hannover ISBN: 3-87870-170-5 pages 39-39,

**Beschreibung**

Die vorliegende Erfindung betrifft ein Effektpigment umfassend ein plättchenförmiges nichtmetallisches Substrat und eine kupferhaltige Beschichtung, ein Verfahren zu dessen Herstellung und die Verwendung dieses Effektpigments in Antifouling-Beschichtungen. Weiterhin betrifft die Erfindung Antifouling-Beschichtungen umfassend ein derartiges Effektpigment.

Unterwasserbeschichtungen bestehen überwiegend aus einer wasserundurchlässigen Beschichtung (Korrosionsschutz, Osmoseschutz, Schutz vor mechanischen Beschädigungen) und einer bewuchshemmenden Beschichtung als Endanstrich. Diese bewuchshemmende Beschichtung soll durch kontinuierliches Auswaschen von Bioziden, Bewuchsorganismen wie Algen, Pilze, Schnecken, Muscheln und weitere Kleinstlebewesen, das sogenannte Fouling, daran hindern, sich an beispielsweise einem Schiffsrumpf anzusetzen. Bewuchsorganismen erhöhen den Reibungswiderstand und das Gewicht eines Schiffes. Sie tragen somit zu einem erhöhten Treibstoffverbrauch und dadurch zu erhöhten Betriebskosten bei. Die Biozide wirken nur, wenn sie aus dem Anstrich in das Meerwasser freigesetzt werden ("leaching"). Ist das nicht der Fall, so werden sie von den Organismen nicht aufgenommen und können ihre biozide Wirkung nicht entfalten. Die Einbindung der Biozide in den Anstrich muss also einen Kompromiss zwischen zu schneller Auswaschung der Biozide und zu geringer Abgabe ins Meerwasser darstellen. Anders ausgedrückt soll die kostenintensive Erneuerung des Anstriches minimiert und gleichzeitig der Schutz vor Bewuchs aufrechterhalten werden. Einige der bisher überwiegend eingesetzten biozidhaltigen Antifoulingsysteme haben in der Vergangenheit weltweit Schäden in der Meeresumwelt verursacht, so dass bestimmte Biozide, wie z.B. Dichlordiphenyltrichlorethan (DDT), Organozinn-, Arsen- und Quecksilberverbindungen international verboten wurden. Als Reaktion auf die Umweltproblematik biozidhaltiger Antifoulingsysteme wurden biozidfreie Antihaftbeschichtungen, vorwiegend auf Silikonbasis, auf den Markt gebracht. Als ein Beispiel ist hier die sogenannte Haifischhaut zu nennen, welche aus nanostrukturiertem Silikon mit unregelmäßiger, aber sich regelmäßig wiederholender Topographie besteht. Die Auslobung von Produkten in Anlehnung an die Haifischhaut ist jedoch nur bedingt korrekt, da die Haifischhaut mit speziellen Schuppen besetzt ist, die sich durch die ständigen Bewegungen der Haie gegenseitig reinigen und nicht allein durch die Rauigkeit Bewuchs abweisend ist. Eine ideale Oberflächenstruktur, die alle Bewuchsorganismen gleichermaßen davon abhält sich anzusiedeln, konnte bislang noch nicht identifiziert werden (B.T. Watermann, D. Daehne, C. Fürle, Einsatz von Nanomaterialien als Alternative zu biozidhaltigen Antifouling-Anstrichen und deren Umweltauswirkungen, Umweltbundesamt Texte 40/2010, UBA-FBNr: 001301, Förderkennzeichen: 363 01 174, S. 14, 19, 23, 24 (im Folgenden "Umweltbundesamt" genannt); R. Kätscher, J. Ranke, M. Bergenthal, J. Warrelmann, Vorstudie zum Bewuchsschutz für Seeschiffe, Januar 1999, 2. Teil S. 5, (im Folgenden "Vorstudie" genannt)).

Aus EP 0 677 989 B1 sind antimikrobielle Zusammensetzungen und Polymere enthaltend diese antimikrobiellen Zusammensetzungen bekannt. Die antimikrobiellen Zusammensetzungen umfassen anorganische Teilchen, welche eine primäre Oberflächenbeschichtung aus einem Metall oder einer Metallverbindung mit antimikrobiellen Eigenschaften aufweisen und mit einer sekundären Schutzschicht überzogen sind. Diese primäre Beschichtung besitzt einen Massenanteil von 0,05 bis 20 Gew.-% bezogen auf das Substrat. Die sekundäre Schutzschicht soll die Freisetzung der antimikrobiellen Komponente in die umgebende Polymermatrix beeinflussen.

Antibakterielle oder elektrisch leitfähige Zusammensetzungen enthaltend anorganische mit Metallen beschichtete Partikel werden in EP 0 427 858 A1 beschrieben. Sofern die Partikel antibakteriell wirksam sein sollen, liegt der Anteil der Beschichtung bei 0,1 bis 20 Gew.-%, bezogen auf das Gesamtgewicht der Partikel. Sofern die Partikel elektrisch leitfähig sein sollen, liegt der Anteil der Beschichtung bei mindestens 25 Gew.-%, bezogen auf das anorganische Partikel. Die mittlere Größe der Partikel liegt zwischen 0,1 und 5 $\mu$m. Bei derart kleinen Partikelgrößen ist nur ein unzureichender Barriereeffekt gewährleistet. Weiterhin ist die spezifische Oberfläche, d.h. Oberfläche pro Gewichtseinheit, dieser Partikel nachteiligerweise sehr groß, so dass eine hohe Freisetzungsrate der antibakteriellen Komponente bewirkt wird.

Antimikrobielle Pigmente umfassend eine Mischung aus anorganischem Pigment und Silberoxid als antimikrobielle Komponente sind aus WO 2004/092283 A2 bekannt. Das Silberoxid kann durch andere antimikrobielle Verbindungen ersetzt werden. Der Gehalt an antimikrobieller Verbindung liegt in einem Bereich von 0,001 bis 10 Gew.-%, vorzugsweise von 0,005 bis 5 Gew.-%, jeweils bezogen auf das anorganische Pigment. Das anorganische Pigment kann dabei eine beliebige Form aufweisen.

Der Einsatz von mit Siliziumdioxid beschichteten Kupferplättchen in Antifouling-Beschichtungen, welche kommerziell als Resist AT, LT oder CT (Fa. Eckart) erhältlich sind, ist aus US 7,147,921 B2 bekannt.

Kupfer enthaltende Antifouling-Beschichtungen, in welchen die Kupfermenge durch Zugabe von Graphit verringert wurde, sind aus US 2004/0197322 A1 bekannt.

In EP 2 246 395 A1 wird ein überwiegend sphärisches Pulver, welches mittels Elektrolyse mit Kupfer(I)oxid belegt wurde, beschrieben. Die Kupfer(I)oxidpartikel sind adhäsiv an der Oberfläche fixiert. Der Anteil an wasserlöslichen Chloridionen beträgt weniger als 0,1 Gew.-% bezogen auf das Gesamtgewicht des Pulvers. Die Pulver sollen sich gut in Antifouling-Beschichtungen einarbeiten lassen und gleichzeitig deren Lagerstabilität erhöhen.

WO 2011/010663 A1 beschreibt mittels Elektrolyse mit Kupfer(I)oxid belegte Partikel, die zur Erhöhung der Lagerstabilität in Antifouling-Beschichtungen eingesetzt werden können. Die Kupfer(I)oxidbelegung besteht hierbei aus einer Ansammlung von oktaedrischen Kupfer(I)oxidpartikeln.

Kompositpigmente für Antifouling-Beschichtungen, in welchen Kupfer(I)oxidpartikel auf der Oberfläche von $SiO_2$- und/ oder $Al_2O_3$-Pulver elektrolytisch abgeschieden werden, sind in JP 01213368 A beschrieben.

Gemäß FR 2 937 043 A1 werden Perlglanzpigmente in Antifouling-Beschichtungen zur Anlockung von Fischen eingesetzt. Die sich an einem Schiffsrumpf ansiedelnden Organismen sollen den Fischen als Nahrung dienen. Gleichzeitig sollen die Perlglanzpigmente der Antifouling-Beschichtung ein optisch ansprechendes Aussehen verleihen.

Biozide Zusammensetzungen umfassend eine anorganische Silber-, Kupfer- oder Zinkverbindung sowie einen polymeren Träger sind aus WO 2010/125323 A1 bekannt. Die Kupferverbindung kann beispielsweise aus basischem Kupferchlorid, basischem Kupfersulfat, basischem Kupfercarbonat, Kupferoxid oder Kupferhydroxid ausgewählt sein. Nachteiligerweise sind beschichtete organische Trägermaterialien in der Regel nur bedingt temperaturstabil. Auch können beim Einsatz in lösemittelhaltigen Systemen unerwünschte Phänomene wie Quellung oder sogar vollständige Auflösung des Trägermaterials auftreten.

Aus JP 54047730 A sind Antifouling-Beschichtungen bekannt, welche beispielsweise basisches Kupferchlorid und roten Phosphor, welcher für die kontrollierte Auswaschung von Kupferionen verantwortlich ist, umfassen.

Die WO 01/60628 A2 betrifft Verfahren und Zusammensetzungen mit laserempfindlichen Pigmenten zur Lasermarkierung von Kunststoffen. Die EP 1 479 730 A1 betrifft auf binären Phosphatsystemen basierende Pigmente. US 6,616,745 B1 betrifft Perlglanzpigmente mit Metalloxid-beschichtetem Glimmer, die eine Beschichtung aus Kupferchromit aufweisen. Bodo Müller / Ulrich Poth (Lackformulierung und Lackrezeptur, 2. überarbeitete Auflage, Vincentz Verlag, 2005, Seite 39) beschreibt Korrosionsinhibitoren, Korrosionsschutzpigmente und -additive.

Aufgabe der vorliegenden Erfindung ist es, eine Antifoulingkomponente für Antifouling-Beschichtungen bereitzustellen, welche sich gleichzeitig durch eine bewuchshemmende Wirkung und einen wirksamen Barriereschutz auszeichnet. Die Antifoulingkomponente soll sich im Vergleich zu herkömmlich eingesetzten Bioziden durch ihren geringeren, als Biozid wirkenden Anteil auszeichnen und dennoch in Antifouling-Beschichtungen eine ausreichende, den Bewuchs langfristig hemmende Wirkung aufweisen. Weiterhin soll eine an die individuellen Bedürfnisse der jeweiligen Antifouling-Beschichtung anpassbare Antifoulingkomponente zugänglich sein. Die Antifoulingkomponente soll darüber hinaus auf einfache Weise in die Antifouling-Beschichtungen einarbeitbar sein. Außerdem sollen Antifouling-

Beschichtungen mit bewuchshemmenden Eigenschaften und gleichzeitig wirksamen Barriereschutz zur Verfügung gestellt werden.

Die Aufgabe wird gelöst durch Bereitstellung eines Effektpigments umfassend ein plättchenförmiges nichtmetallisches Substrat und eine kupferhaltige Beschichtung gemäß Anspruch 1.

Bevorzugte Weiterbildungen sind in den abhängigen Ansprüchen 2 bis 8 angegeben.

Des Weiteren wird die Aufgabe gelöst durch Bereitstellung eines Verfahrens zur Herstellung eines erfindungsgemäßen Effektpigments, wobei das Verfahren folgende Schritte umfasst:

(a1) Suspendieren von plättchenförmigem nichtmetallischen Substrat in einer wässrigen Lösung,
(b1) Zugeben einer Kupfersalzlösung und Abscheiden einer kupferhaltigen Beschichtung auf dem plättchenförmigen nichtmetallischen Substrat unter Erhalt des Effektpigments,
(c1) Filtrieren, optional Trocknen und/oder optional Kalzinieren des gemäß Schritt (b1) erhaltenen Effektpigments

oder

wobei das Verfahren folgende Schritte umfasst:

(a2) Inkontaktbringen einer wässrigen Kupfersalzlösung und eines plättchenförmigen nichtmetallischen Substrats unter Bereitstellung einer Suspension,
(b2) Zugeben eines Kupferkomplexierungsmittels zu der in Schritt (a2) erhaltenen Suspension,
(c2) Zugeben eines Reduktionsmittels zu der Suspension aus Schritt (b2) unter Erhalt des Effektpigments,
(d2) Filtrieren, optional Trocknen und/oder optional Kalzinieren des gemäß Schritt (c2) erhaltenen Effektpigments.

Gemäß einer bevorzugten Weiterbildung des erfindungsgemäßen Verfahrens wird im Schritt (b2) bei der zweiten Verfahrensvariante als Kupferkomplexierungsmittel eine Seignettesalzlösung, mithin eine Kaliumnatriumtartratlösung, verwendet.

Gemäß einer weiteren Variante der Erfindung können als Kupferkomplexierungsmittel auch Diethylentriaminpentaessigsäure, Ethylendiamintetraessigsäure Calcium-di-Natriumsalz-Dihydrat, Ethylendiamintetraessigsäure di-Kaliumsalz Dihydrat, Ethylendiamintetraessigsäure Magnesium-di-Kaliumsalz, Ethylendiamintetraessigsäure di-Natriumsalz-Dihydrat, Ethylendiamintetraessigsäure, Nitrilotriessigsäure, Ethylendiamindibernsteinsäure, Ethylenglycol-bis(aminoethylether)-N,N,N',N'-tetraessigsäure,N,N-Dimethylethanolamin, Diethylamin, Triethylamin, Dimethylamin, n-Butylamin, i-Butylamin und/oder Mischungen davon verwendet werden .

Als Reduktionsmittel kann im Schritt (c2) bei der zweiten Verfahrensvariante jedes geeignete Kupferreduktionsmittel verwendet werden. Als geeignet haben sich beispielsweise reduzierende Zucker, wie Glucose, Fructose, Galactose, Maltose und Lactoseoder Alkanale erwiesen.

Weiterhin wird die Aufgabe gelöst durch Bereitstellung einer Antifouling-Beschichtung umfassend ein Effektpigment nach einem der Ansprüche 1 bis 8 als auch durch die Verwendung eines Effektpigments nach einem der Ansprüche 1 bis 8 in einer Antifouling-Beschichtung.

Das plättchenförmige nichtmetallische Substrat des erfindungsgemäßen Effektpigments kann aus der Gruppe, bestehend aus natürlichen Glimmerplättchen, synthetischen Glimmerplättchen, Glasplättchen, $SiO_2$-Plättchen, $Al_2O_3$-Plättchen, BiOCl-Plättchen, $TiO_2$-Plättchen, $Fe_2O_3$-Plättchen, Sericitplättchen, Kaolinplättchen, Graphitplättchen, plättchenförmigen Substraten, die eine anorganisch-organische Mischschicht umfassen, ausgewählt werden. Bevorzugt wird das plättchenförmige nichtmetallische Substrat aus der Gruppe, bestehend aus natürlichen Glimmerplättchen, synthetischen Glimmerplättchen, Glasplättchen, $SiO_2$-Plättchen, $Al_2O_3$-Plättchen, ausgewählt. Weiter bevorzugt wird das plättchenförmige nichtmetallische Substrat aus der Gruppe, bestehend aus natürlichen Glimmerplättchen, synthetischen Glimmerplättchen, Glasplättchen, ausgewählt. Besonders bevorzugt als plättchenförmiges nichtmetallisches Substrat sind natürliche und synthetische Glimmerplättchen, ganz besonders bevorzugt sind natürliche Glimmerplättchen.

Erfindungsgemäß wird das plättchenförmige nichtmetallische Substrat mit einer kupferhaltigen Beschichtung versehen.

Die kupferhaltige Beschichtung kann aus der Gruppe, bestehend aus Kupfer(0), Kupfer(I)oxid, Kupfer(I)hydroxid, Kupfer(II)oxid (CAS-Nr. 1317-38-0), Kupfer(II)hydroxid (CAS-Nr. 20427-59-2), Kupfer(I)chlorid (CAS-Nr. 7758-89-6), Kupfer(II)chlorid (CAS-Nr. 7447-39-4), Kupfer(I)bromid, Kupfer(II)bromid, Kupfer(I)iodid, Kupfer(II)acetat, Kupfer(II)acetat Monohydrat (CAS-Nr. 6046-93-1), Kupfer(II)hydroxidcarbonat (CAS-Nr. 12069-69-1), Kupfer(II)citrat(CAS-Nr.866-82-0), Kupfer(II)nitrat (CAS-Nr. 3251-23-8), Kupfer(II)sulfat Pentahydrat (CAS-Nr. 7758-99-8), Kupfer(I)sulfid, Kupfer(II)sulfid, Kupferthiocyanat, Kupferoxychlorid (CAS-Nr. 1332-65-6), Kupfer(II)tartrat (CAS-Nr. 815-82-7)und Mischungen davon, ausgewählt werden.

Bevorzugt wird die kupferhaltige Beschichtung aus der Gruppe, bestehend aus Kupfer(0), Kupfer(I)oxid, Kupfer(II)oxid, Kupfer(II)nitrat, Kupferthiocyanat, Kupfersulfat, Kupferoxychlorid und Mischungen davon, ausgewählt.

Bei einer besonders bevorzugten Ausführungsform umfasst die kupferhaltige Beschichtung Kupferoxychlorid, welches mineralogisch unterschiedlichen Kristallsystemen, Raumgruppen und Kristallklassen zugeordnet werden kann. Kristallisiert das Kupferoxychlorid auf dem zu beschichtenden plättchenförmigen nichtmetallischen Substrat in orthorhombischer Kristallstruktur aus, so spricht man von dem Mineral Atacamit. Liegt eine monokline Kristallstruktur vor, so kann je nach Raumgruppe Botallackit oder Klinoatacamit vorliegen. Bei trikliner Kristallstruktur spricht man von Anatacamit. In der Regel bildet das Kupferoxychlorid auf dem zu beschichtenden plättchenförmigen nichtmetallischen Substrat nicht nur ein Kristallgitter aus, sondern es ist ein Gemisch verschiedener Kristallsysteme über eine Kristallstrukturanalyse zu identifizieren. Entsprechende kupferhaltige Beschichtungen müssen nicht zwingend kristallin vorliegen. Vielmehr können diese teilkristallin oder auch amorph vorliegen.

Die kupferhaltige Beschichtung kann auch eine Verbindung der allgemeinen Summenformel (I)

$$Cu_wM_x(OH)_yCl_z \cdot nH_2O \qquad (I)$$

sein, wobei M für Zink, Nickel, Magnesium, Cobalt oder Eisen stehen kann, w aus einem Bereich von 0,5 bis 5, x aus einem Bereich von 0 bis 2, y aus einem Bereich von 1 bis 8 und z aus einem Bereich von 1 bis 2 ausgewählt werden kann, mit der Maßgabe, dass (y + z) = (w · Oxidationsstufe von Cu + x · Oxidationsstufe von M) ist. n kann für einen Wert zwischen 0 und 10 stehen.

Steht M in obiger Summenformel (I) für Magnesium, so kann beispielsweise Haydeeit $Cu_3Mg(OH)_6Cl_2$ vorliegen. Gemäß einer bevorzugten Variante liegt die wenigstens eine kupferhaltige Beschichtung als Haydeeit vor.

Wird in obiger Summenformel (I) für M Zink eingesetzt, so spricht man in Abhängigkeit von der Stöchiometrie von Herbertsmithit $Cu_3Zn(OH)_6Cl_2$ oder Paratacamit $Cu_{1,5}Zn_{0,5}(OH)_3Cl$. Sowohl Haydeeit, Herbertsmithit als auch Paratacamit weisen eine trigonale Kristallstruktur auf. Auch bei dieser Ausführungsform kann die kupferhaltige Beschichtung teilkristallin oder auch amorph vorliegen.

Gemäß einer weiteren bevorzugten Variante liegt die wenigstens eine kupferhaltige Beschichtung als Herbertsmithit vor.

Gemäß einer weiteren bevorzugten Variante liegt die wenigstens eine kupferhaltige Beschichtung als Paratacamit vor.

Erfindungsgemäß können in der kupferhaltigen Beschichtung auch Mischungen verschiedener der vorgenannten Kristallstrukturen vorliegen.

Bei einer besonders bevorzugten Ausführungsform umfasst die kupferhaltige Beschichtung Kupferoxychlorid und wenigstens eine weitere Verbindung gemäß Formel I.

Das plättchenförmige nichtmetallische Substrat ist zumindest teilweise mit wenigstens einer kupferhaltigen Beschichtung bedeckt. Es kann aber auch in Abhängigkeit von der Beschichtung eine vollflächige Belegung der Oberfläche vorliegen.

Gemäß einer bevorzugten Weiterbildung der Erfindung umhüllt die kupferhaltige Beschichtung das plättchenförmige nichtmetallische Substrat vollständig.

Das erfindungsgemäße Effektpigment weist einen Kupfergehalt aus einem Bereich 3 bis 70 Gew.-%, bevorzugt aus einem Bereich von 11 bis 64 Gew.-%, weiter bevorzugt aus einem Bereich von 15 bis 45 Gew.-%, besonders bevorzugt aus einem Bereich von 18 bis 43 Gew.-% und ganz besonders bevorzugt aus einem Bereich von 20 bis 40 Gew.-%, jeweils bezogen auf das Gesamtgewicht des Effektpigments, auf.

Der Kupfergehalt des erfindungsgemäßen Effektpigments wird über eine jodometrische Titration bestimmt.

Die spezifische Kupferoberfläche des Effektpigments, definiert als Quotient aus Kupfergehalt [Gew.-%] und spezifischer Oberfläche nach BET [m²/g],

$$\frac{Kupfergehalt \quad [Gew.-\%]}{BET \quad [\frac{m^2}{g}]}$$

gibt das Verhältnis der Pigmentoberfläche zum Gehalt an bewuchshemmender Beschichtung an. Sie erlaubt Rückschlüsse auf die Freisetzung der Kupferionen bei identischer Pigmentmenge und identischer bewuchshemmender Beschichtung. Je höher der Wert für die spezifische Kupferoberfläche ist, desto größer ist die Freisetzung an Kupferionen bei identischer Pigmentmenge.

Je kleiner der Wert, desto "umweltschonender" sind entsprechende Pigmente, da bei einem geringen Kupfergehalt ein Maximum an Oberfläche vorliegt.

Das erfindungsgemäße Effektpigment weist eine spezifische Kupferoberfläche kleiner 60 Gew.-%·g·m⁻², bevorzugt jedoch kleiner 50 Gew.-%·g·m⁻², weiter bevorzugt kleiner oder gleich 30 Gew.-%·g·m⁻² und ganz besonders bevorzug kleiner oder gleich 15 Gew.-%·g·m⁻² auf.

Das erfindungsgemäße Effektpigment weist vorzugsweise einen $D_{50}$-Wert aus einem Bereich von 5,5 bis 100 µm, bevorzugt aus einem Bereich von 6 bis 90 µm, besonders bevorzugt aus einem Bereich von 7 bis 85 µm, noch weiter bevorzugt aus einem Bereich von 8 bis 60 µm und ganz besonders bevorzugt aus einem Bereich von 10 bis 45 µm auf.

Das erfindungsgemäße Effektpigment besitzt vorzugsweise einen Chloridgehalt von größer 0,1 Gew.-%, mindestens jedoch größer 0,2 Gew.-% und ganz besonders bevorzugt größer oder gleich 0,5 Gew.-%, jeweils bezogen auf das Gesamtgewicht des Pigmentes.

Unter der mittleren Partikelgröße Dso wird im Rahmen dieser Erfindung der $D_{50}$-Wert der Summenhäufigkeitsverteilung der volumengemittelten Größenverteilungsfunktion, wie sie durch Laserbeugungsmethoden erhalten wird, verstanden. Der $D_{50}$-Wert gibt an, dass 50% der Effektpigmente einen Durchmesser aufweisen, der gleich oder kleiner als der angegebene Wert, ist. Die mittlere Partikelgröße Dso der erfindungsgemäßen Effektpigmente wurde mit einem Gerät der Fa. Quantachrome (Cilas 1064) gemäß Herstellerangaben vermessen.

Das Aspektverhältnis der erfindungsgemäßen Effektpigmente liegt bevorzugt in einem Bereich von 5 bis 2000, weiter bevorzugt in einem Bereich von 10 bis 1500, besonders bevorzugt in einem Bereich von 11 bis 1000 und ganz besonders bevorzugt in einem Bereich von 5 bis 500.

Die mittlere Dicke der erfindungsgemäßen Effektpigmente liegt bevorzugt in einem Bereich von 50 bis 5000 nm, weiter bevorzugt in einem Bereich von 60 bis 2000 nm, besonders bevorzugt in einem Bereich von 70 bis 1000 nm und ganz besonders bevorzugt in einem Bereich von 80 bis 800 nm.

Bestimmt wird die mittlere Dicke der erfindungsgemäßen Effektpigmente über den Spreitwert. Sollte dies aufgrund des zu hohen spezifischen Gewichts des Effektpigments nicht möglich sein, dann wird die mittlere Dicke anhand von rasterelektronenmikroskopischen Querschliffen ermittelt

Gemäß einer weiteren bevorzugten Ausführungsform ist die kupferhaltige Beschichtung nasschemisch auf das plättchenförmige nichtmetallische Substrat aufgebracht, so dass eine umhüllende Beschichtung mit dem kupferhaltigen Material gewährleistet ist.

Gemäß einer weiteren bevorzugten Ausführungsform ist das nasschemisch beschichtete erfindungsgemäße Effektpigment optional getrocknet und/oder optional kalziniert. Die Trocknung der erfindungsgemäßen Effektpigmente erfolgt bei Kupfer(0) sowie Kupfer(I) haltigen Beschichtungen bevorzugt unter Inertgasatmosphäre. Die Kalzinierung erfolgt gegebenenfalls unter Luftausschluss und/oder unter reduzierenden Bedingungen in Gegenwart von z.B. Wasserstoff vorzugsweise bei einer Temperatur von 250 bis 800°C, weiter bevorzugt von 350 bis 600°C. Es hat sich herausgestellt, dass durch die Kalzinierung eine zuverlässige Trocknung der kupferhaltigen Schicht erfolgt, wodurch die Kinetik der Abgabe von Kupferionen in der Antifouling-Beschichtung optimiert wird. Es hat sich gezeigt, dass die Kupferionen aus einem kalzinierten erfindungsgemäßen Effektpigment verlangsamt, jedoch in einem für den Zweck der Erfindung ausreichenden Maße in das umgebende Wasser abgegeben werden.

Zur Verbesserung ihrer anwendungstechnischen Eigenschaften können die erfindungsgemäßen Effektpigmente mit einer Oberflächenmodifizierung versehen sein, welche die Einarbeitbarkeit in beispielsweise eine Antifouling-Beschichtung erleichtert oder das Aufschwimmverhalten der Effektpigmente beeinflusst.

Gemäß einer bevorzugten Weiterbildung der Erfindung ist die Pigmentoberfläche des Effektpigments organisch-chemisch oberflächenmodifiziert.

Zur Oberflächenmodifizierung kann beispielsweise wenigstens ein Silan auf der kupferhaltigen Beschichtung aufgebracht sein. Bei den Silanen kann es sich um Alkylsilane mit verzweigten oder unverzweigten Alkylresten mit 1 bis 24 C-Atomen handeln.

Bei den Silanen kann es sich aber auch um organofunktionelle Silane handeln, die eine chemische Anbindung an einen Kunststoff, ein Bindemittel eines Lackes oder einer Farbe, etc. ermöglichen. Diese organofunktionellen Gruppen können auch als Kupplungsgruppen oder funktionelle Bindungsgruppen bezeichnet werden und werden bevorzugt aus der Gruppe, die aus Hydroxy, Amino, Acryl, Methacryl, Vinyl, Epoxy, Isocyanat, Cyano und Mischungen davon besteht, ausgewählt.

Die vorzugsweise als Oberflächenmodifizierungsmittel verwendeten organofunktionellen Silane, die geeignete funktionelle Gruppen aufweisen, sind kommerziell verfügbar und werden beispielsweise von der Fa. Evonik hergestellt und unter dem Handelsnamen "Dynasylan" vertrieben. Weitere Produkte können von der Fa. Momentive (Silquest-Silane) oder von der Fa. Wacker, beispielsweise Standard- und $\alpha$-Silane aus der GENIOSIL-Produktgruppe, bezogen werden.

Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), Methyltri(m)ethoxysilan (Dynasylan MTMS bzw. MTES), 3-Mercaptopropyltrimethoxysilan (Dynasylan MTMO; Silquest A-189), 3-Glycidoxypropyltrimethoxysilan (Dynasylan GLYMO, Silquest A-187), Tris[3-(trimethoxysilyl)propyl]isocyanurat (Silquest Y-11597), Bis[3-(triethoxysilyl)propyl)]tetrasulfid (Silquest A-1289), Bis[3-(triethoxysilyl)propyldisulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), (Isocyanatomethyl)methyldimethoxysilan, (Isocyanatomethyl)trimethoxysilan, 3-(Triethoxysilyl)propylbernsteinsäureanhydrid (GENIOSIL GF 20), (Methacryloxymethyl)methyldiethoxysilan, 2-Acryloxyethylmethyldimethoxysilan, 2-Methacryloxyethyltrimethoxysilan, 3-Acryloxypropylmethyldimethoxysilan, 2-Acryloxyethyltrimethoxysilan, 2-Methacryloxyethyltriethoxysilan, 3-Acryloxypropyltrimethoxysilan, 3-Acryloxypropyltripropoxysilan, 3-Methacryloxypropyltriethoxysilan, 3-Methacryloxypropyltriacetoxysilan, 3-Methacryloxypropylmethyldimethoxysilan, Vinyltrichlorsilan, Vinyltrimethoxysilan (GENIOSIL XL 10), Vinyltris(2-methoxyethoxy)silan (GENIOSIL GF 58), Vinyltriacetoxysilan oder Mischungen davon.

Vorzugsweise werden als organofunktionelle Silane 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), Methyltri(m)ethoxysilan (Dynasylan MTMS bzw. MTES), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), 3-(Triethoxy-silyl)propylbernsteinsäureanhydrid (GENIOSIL GF 20), Vinyltrimethoxysilan (GENIOSIL XL 10) und/ oder Vinyltris(2-methoxyethoxy)silan (GENIOSIL GF 58) verwendet.

Es ist aber auch möglich, andere organofunktionelle Silane auf die erfindungsgemäßen Effektpigmente aufzubringen.

Weiterhin lassen sich, beispielsweise kommerziell von Degussa erhältliche, wässrige Vorhydrolysate einsetzen. Hierzu gehören unter anderem wässriges Aminosiloxan (Dynasylan Hydrosil 1151), wässriges amino-/ alkylfunktionelles Siloxan (Dynasylan Hydrosil 2627 oder 2909), wässriges diaminofunktionelles Siloxan (Dynasylan Hydrosil 2776), wässriges epoxyfunktionelles Siloxan (Dynasylan Hydrosil 2926), amino-/ alkylfunktionelles Oligosiloxan (Dynasylan 1146), vinyl-/ alkylfunktionelles Oligosiloxan (Dynasylan 6598), oligomeres Vinylsilan (Dynasylan 6490) oder oligomeres kurzkettiges alkylfunktionelles Silan (Dynasylan 9896).

Bei einer bevorzugten Ausführungsform enthält das organofunktionelle Silangemisch neben wenigstens einem Silan ohne funktionelle Bindungsgruppe wenigstens ein aminofunktionelles Silan.

Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z.B. mit Isocyanat- oder Carboxylatfunktionen des Bindemittels, oder Wasserstoffbrückenbindungen wie mit OH- oder COOR-Funktionen oder auch ionische Wechselwirkungen beinhalten. Eine Aminofunktion ist daher für den Zweck der chemischen Anbindung des Pigments an verschiedenartige Bindemittel sehr gut geeignet.

Bevorzugt werden hierzu folgende Verbindungen genommen: 3-Aminopropyltrimethoxysilan (Dynasylan AMMO; Silquest A-1110), 3-Aminopropyltriethoxysilan (Dynasylan AMEO), [3-(2-Aminoethyl)-aminopropyl]trimethoxysilan (Dynasylan DAMO, Silquest A-1120), [3-(2-Aminoethyl)-aminopropyl]triethoxysilan, triaminofunktionelles Trimethoxysilan (Silquest A-1130), Bis-(gamma-trimethoxysilylpropyl)amin (Silquest A-1170), N-Ethyl-gammaaminoisobutyltrimethoxysilan (Silquest A-Link 15), N-Phenyl-gamma-aminopropyltrimethoxysilan (Silquest Y-9669), 4-Amino-3,3-dimethylbutyltrimethoxysilan (Silquest A-1637), N-Cyclohexylaminomethylmethyldiethoxysilan (GENIOSIL XL 924), N-Cyclohexylaminomethyltriethoxysilan (GENIOSIL XL 926), N-Phenylaminomethyltrimethoxysilan (GENIOSIL XL 973) oder deren Mischungen.

Bei einer weiterhin bevorzugten Ausführungsform ist das Silan ohne funktionelle Bindungsgruppe ein Alkylsilan. Das Alkylsilan weist vorzugsweise die Formel $R_{(4-z)}Si(X)_z$ auf. Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/ oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

An oder auf der Oberfläche der erfindungsgemäßen Effektpigmente können neben den erwähnten Silanen bzw. Silangemischen auch weitere organisch-chemische Modifizierungsmittel, wie beispielsweise substituierte oder nicht substituierte Alkylreste, Polyether, Thioether, Siloxane, etc. und Mischungen davon angeordnet sein.

Weitere Oberflächenmodifizierungsmittel können beispielsweise gesättigte Fettsäuren wie Ameisensäure, Essigsäure, Propionsäure, Buttersäure, Valeriansäure, Capronsäure, Önanthsäure, Caprylsäure, Pelargonsäure, Caprinsäure, Laurinsäure, Pentadecansäure, Margarinsäure, Stearinsäure, Nonadecansäure, Arachinsäure, Behensäure, Lignocerinsäure, Cerotinsäure, Montansäure, Melissinsäure oder Mischungen davon darstellen. Ebenso können ungesättigte Fettsäuren wie Undecylensäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure sowie Mischungen daraus zur Oberflächenmodifizierung der erfindungsgemäßen Effektpigmente dienen. Auch sind mehrfach gesättigte Fettsäuren wie Linolsäure, Alpha-Linolensäure, Gamma-Linolensäure, Calendulasäure, Punicinsäure, Alpha-Elaeostearinsäure, Beta-Elaeostearinsäure, Arachidonsäure, Timnodonsäure, Clupanodonsäure, Cervonsäure, deren Mischungen, sowie funktionalisierte Fettsäuren wie Vernolsäure oder auch Rizinolsäure als Oberflächenmodifizierungsmittel geeignet. Weiterhin können verschiedene Phosphonsäuren, Sulfonsäuren oder auch Dicarbonsäuren verwendet werden. Selbstverständlich können die vorstehend genannten Oberflächenmodifizierungsmittel auf der Basis von gesättigten oder ungesättigten Fettsäuren sowie Phosphon-, Sulfon- oder Dicarbonsäuren auch als Mischung eingesetzt werden.

Es können aber auch anorganisch-chemische Modifizierungsmittel (z.B. $Al_2O_3$ oder $ZrO_2$ oder deren Gemische), welche z.B. die Dispergierbarkeit und/ oder Verträglichkeit im jeweiligen Anwendungsmedium erhöhen können, auf die Pigmentoberfläche aufgebracht werden.

Über die Oberflächenmodifizierung kann beispielsweise die Hydrophilie oder Hydrophobie der Pigmentoberfläche verändert und/ oder eingestellt werden. Beispielsweise können über die Oberflächenmodifizierung die Leafing- bzw.

Nonleafing-Eigenschaften der erfindungsgemäßen Effektpigmente verändert und/ oder eingestellt werden. Unter Leafing wird verstanden, dass sich die erfindungsgemäßen Pigmente in einem Anwendungsmedium, beispielsweise einem Lack, an oder in der Nähe der Grenz- oder Oberfläche des Anwendungsmediums anordnen.

Die Oberflächenmodifizierungsmittel können auch reaktive chemische Gruppen, wie beispielsweise Acrylat-, Methacrylat-, Vinyl-, Isocyanat-, Cyano-, Epoxy-, Hydroxy-, Aminogruppen oder Mischungen davon, aufweisen. Diese chemisch reaktiven Gruppen ermöglichen eine chemische Anbindung, insbesondere Ausbildung von kovalenten Bindungen, an das Anwendungsmedium oder Komponenten des Anwendungsmediums, wie beispielsweise Bindemittel. Hierdurch können beispielsweise die chemischen und/ oder physikalischen Eigenschaften von ausgehärteten Lacken oder Farben wie z.B. die Beständigkeit gegenüber Umwelteinflüssen wie Feuchtigkeit, Sonneneinstrahlung, UV-Beständigkeit, etc., oder gegenüber mechanischen Einflüssen, beispielsweise Kratzern etc., verbessert werden.

Die chemische Reaktion zwischen den chemisch-reaktiven Gruppen und dem Anwendungsmedium bzw. Komponenten des Anwendungsmediums kann beispielsweise durch Einstrahlung von Energie, beispielsweise in Form von UV-Strahlung und/ oder Wärme, induziert werden.

Unter einer Antifouling-Beschichtung werden Oberflächenbeschichtungen oder Anstriche verstanden, die dem Bewuchs von Oberflächen entgegenwirken oder diesen verhindern.

Wird beispielsweise ein Schiffsrumpf von unerwünschtem Bewuchs befallen, kann dessen Beschichtung beschädigt werden, so dass Korrosion, Farbveränderung und Veränderung der elektrischen Leitfähigkeit begünstigt werden. Außerdem erhöht sich durch den Bewuchs der Reibungswiderstand und somit der Treibstoffverbrauch eines Schiffes. Eine beschädigte Beschichtung muss erneuert werden, d.h. das Schiff muss aus dem Wasser herausgenommen werden, und steht nicht mehr zur Verfügung. Weiterhin können durch unerwünschten Bewuchs Organismen in Bereiche verschleppt werden, in denen diese natürlicherweise nicht beheimatet sind (Review (Progress in Organic Coatings 50 (2004) 75-104)).

Ob und wie stark z.B. ein Schiffsrumpf von Fouling-Organismen bewachsen wird, hängt unter anderem von der Strömungsgeschwindigkeit an der Oberfläche, vom Vorkommen besiedelnder Organismen, beispielsweise in Hafenbecken, und deren Wachstumsbedingungen ab. Warme tropische Gewässer bieten bessere Wachstumsbedingungen für Fouling-Organismen als beispielsweise kalte Gewässer. Des Weiteren ist der Salzgehalt des Wassers ein nicht zu vernachlässigender Faktor bei der Besiedelung mit Fouling-Organismen. Während im Süßwasser nur einzeilige Organismen im Bewuchs auftreten (Mikrofouling), nimmt der Bewuchs mit steigendem Salzgehalt zu und es treten verstärkt auch höhere Organismen wie Seepocken im Bewuchs auf ("Vorstudie" 2. Teil S. 3).

Der chemische Bewuchsschutz beruht darauf, dass Wirkstoffe aus der Antifouling-Beschichtung freigesetzt werden und in der dünnen Wasserschicht unmittelbar am Schiffsrumpf in Konzentrationen vorliegen, die die ansiedlungsfähigen Stadien von Bewuchsorganismen von der Besiedelung abhalten. Die Besiedelung findet nur bei sehr geringen Geschwindigkeiten statt, im Wesentlichen aber bei Stillstand des Schiffes. Um hier eine entsprechend hohe Konzentration zu erreichen, muss der Anstrich bezüglich der Wirkstoffe eine genügend hohe Auswaschungs- und Freisetzungsrate ("leaching rate") aufweisen. Die Freisetzung darf aber auch nicht zu schnell sein, da sonst einerseits die Lebensdauer des Anstriches abnimmt, andererseits aber auch unnötig viel Biozid in die Umwelt abgegeben wird. Die größte Freisetzung findet in voller Fahrt statt. Lange Liegezeiten und der Aufenthalt in tropischen Gewässern sind die wichtigsten bewuchsfördernden Faktoren (Vorstudie, S. 5).

Wünschenswert sind Antifouling-Beschichtungen, welche eine individuelle Anpassung des wenigstens einen Biozids an z.B. zu befahrendes Gewässer, Standzeiten und Fahrtgeschwindigkeit eines Schiffes ermöglichen. Für die Freisetzung von Bioziden aus Antifouling-Beschichtungen ist jedoch das Zusammenspiel aller Einzelkomponenten der Beschichtung und nicht nur die Eigenschaften des jeweils eingesetzten, wenigstens einen Biozids maßgeblich ("Vorstudie" 2. Teil S. 6).

In der Regel müssen in Antifouling-Beschichtungen Breitbandbiozide eingesetzt werden, die für praktisch alle Lebewesen stark toxisch wirken, eine selektive Bekämpfung der Organismen würde nur dazu führen, dass dieser Platz von anderen eingenommen würde ("Vorstudie" 2. Teil S. 3).

Das meist verwendete Biozid in herkömmlichen Antifoulingsystemen ist zurzeit Kupfer, sowohl als Metallpulver als auch in verschiedenen Verbindungen. Um die Toxizität des Kupfers und die der Gesamtformulierung zu verstärken, werden den meisten Produkten weitere Biozide zugesetzt. Die gebräuchlichsten Co-Biozide in konventionellen Antifoulingprodukten sind Zink, Zinkpyrithion, Dithiocarbamate, s-Triazine, Methylharnstoffe und Isothiazolinone ("Umweltbundesamt" S. 29).

Kupfer ist ein essentielles Spurenelement und damit für alle Lebewesen unverzichtbar. In höheren Konzentrationen zeigen sich aber schädliche Effekte. Der Konzentrationsbereich, in dem weder Mangelerscheinungen auftreten noch Schadeffekte zu beobachten sind, kann recht klein sein ("Vorstudie" 2. Teil S. 11).

Kupfer kommt im aquatischen Milieu überwiegend komplexiert vor und seine Bioverfügbarkeit wird entscheidend von Parametern wie pH-Wert, Gehalt an gelöstem organischem Kohlenstoff, Härte und Salinität gesteuert. Es wird davon ausgegangen, dass die Menge an bioverfügbaren Ionen umso geringer ist, je höher der Anteil an gelöstem organischem Kohlenstoff ist. Die Unterschiede in der Toxizität von der Teilchengröße des Kupfers wurden an Mäusen, denen Kupferpartikel unterschiedlicher Größe über die Nahrung verabreicht wurde, untersucht. Auch wenn diese Studie nicht direkt auf aquatische Organismen übertragbar ist, liefert sie Angaben zur Größe, der spezifischen Oberfläche und Partikel-Anzahl pro Gramm der unterschiedlichen Kupferpartikel, die direkt mit der Toxizität korrelieren. Es stellte sich heraus, dass die kleinste Partikelgröße die stärkste Toxizität aufwies. Bei aquatischen Organismen sind vor allem die freien Kupferionen für die toxischen Auswirkungen relevant, da diese mit der Zelloberfläche in Kontakt treten oder in die Zelle eindringen können ("Umweltbundesamt" S. 53-54).

Bei Antifouling-Beschichtungen wird zwischen biozidhaltigen und biozidfreien Beschichtungen unterschieden. Zu den biozidhaltigen Antifouling-Beschichtungen zählen die sogenannten "self polishing copolymer" (SPC), "controlled depletion polymer" (CDP), "contact leaching" sowie "hybrid SPC" Beschichtungen. Biozidfreie Antifouling-Beschichtungen, sogenannte "foul release" Systeme versuchen über Oberflächenmodifizierungen den Bewuchs zu hemmen. Ob nun beispielsweise ein Schiffsrumpf mit einer biozidfreien oder einer biozidhaltigen Antifouling-Beschichtung versehen ist bzw. ob der Schiffsrumpf sowohl Bereiche mit einer biozidfreien als auch mit einer biozidhaltigen Antifouling-Beschichtung enthält, kann von den unterschiedlichsten Faktoren, wie z.B. Einsatzgebiet oder Fahrtgeschwindigkeit des Schiffes abhängen. In kommerziell erhältlichen Antifouling-Beschichtungen wird hauptsächlich Kupfer(I)oxid als Biozid eingesetzt. Da Kupfer(I)oxid allerdings nicht alle Arten des Bewuchses unterbinden kann, werden einer Antifouling-Beschichtung bevorzugt zusätzliche Biozide zugegeben. Kupfer(I)oxid wirkt z.B. nicht gegen das Algenwachstum, hier müssen die Photosynthese unterbindende sogenannte "booster" Biozide, wie z.B. Zink- oder Kupferpyrithion eingesetzt werden.

Die Wirkungsweise von biozidhaltigen Antifouling-Beschichtungen beruht auf der kontrollierten Freisetzung von Bioziden in das umgebende Meerwasser. Die Biozidfreisetzung kann in Abhängigkeit von der verwendeten Antifouling-Beschichtung durch Diffusionsprozesse, Hydrolyse oder Ionenaustausch erfolgen. Kolophoniumbasierende Antifouling-Beschichtungen können dem Meerwasser das Eindringen in die Beschichtung erlauben und das Biozid in einem Diffusionsprozess freisetzen. Bei kolophoniumbasierenden Antifouling-Beschichtungen wird zwischen Beschichtungen mit hohem und niedrigem Kolophoniumgehalt unterschieden. Antifouling-Beschichtungen mit hohem Kolophoniumgehalt sind weicher als jene mit niedrigem Kolophoniumgehalt. Sie lösen sich langsam im Meerwasser auf und werden als "soluble matrix" oder "controlled depletion polymer" (CDP)Antifouling-Beschichtungen bezeichnet. Dies ist in Abhängigkeit von der Kolophoniumharzmodifikation sowie den restlichen Bestandteilen der Antifouling-Beschichtung steuerbar. CDP Antifouling-Beschichtungen sind nur teilweise wasserlöslich. Wenn sich die wasserlöslichen Komponenten aufgelöst haben, bleibt die sogenannte "leached layer" zurück, welcher mit der Zeit die Biozidfreisetzung verzögert. Vor der Erneuerung der Antifouling-Beschichtung sollte diese Schicht komplett entfernt werden. Ein niedriger Kolophoniumgehalt bedingt harte "insoluble matrix" oder "contact leaching" Antifouling-Beschichtungen, welche keine selbstpolierenden Eigenschaften aufweisen. Sowohl die "contact leaching" als auch die "CDP" Antifouling-Beschichtungen zeigen exponentiell abnehmende Biozidfreisetzungsraten.

"Self-polishing copolymer" (SPC) Beschichtungen umfassen Kupfer- oder Zinkacrylate, welche mit Salzwasser durch Hydrolyse oder Ionenaustausch reagieren und so die Freisetzung des eingesetzten Biozids gewährleisten.

Antifouling-Beschichtungen sind üblicherweise komplexe Formulierungen und bestehen in der Regel aus einer Mischung von 20 bis 30 Einzelkomponenten, u.a. Bindemittel, Pigmente, Hilfs- und Füllstoffe, Lösemittel und Additive, wie z.B. UV-Absorber, Thixotropiermittel oder Netzmittel.

Als typische Bestandteile für Bindemittel für CDP Antifouling-Beschichtungen sind Kolophoniumharze und modifizierte Kolophoniumharze, für SPC Antifouling-Beschichtungen sind Kupfer- oder Zinkacrylate und für Hybrid-SPC Antifouling-Beschichtungen sind Mischungen der bereits genannten Bindemittel zu nennen. Als Pigmente, Hilfs- und Füllstoffe können in den genannten Antifouling-Beschichtungen z.B. Titandioxid, Ruß, Phthalocyaninblau, Talkum, Zinkoxid, Bariumsulfat, natürlicher Glimmer oder Kaolin eingesetzt werden. Gängige Lösemittel der Antifouling-Beschichtungen sind beispielsweise Xylol, Methylisobutylketon, Butanol oder Testbenzin. Weiterhin können Additive, wie z.B. UV-Absorber der Produktreihe Tinuvin, Fa. BASF, Ludwigshafen, Deutschland, Netz- und Dispergieradditive der Produktreihe Disperbyk, Fa. Byk-Chemie, Wesel, Deutschland, Thixotropiermittel wie Thixatrol ST, Fa. Elementis Specialties, Hightstown, New Jersey, USA, oder pyrogene Kieselsäuren wie Aerosile, Fa. Evonik, Essen, Deutschland zugesetzt werden.

Überraschenderweise zeigte der Ersatz von annähernd sphärischem Kupfer(I)oxid durch das erfindungsgemäße Perlglanzpigment in hiermit versehenen Antifouling-Beschichtungen vergleichbare oder bessere bewuchshemmende Eigenschaften. Der Bewuchs von Oberflächen in Seewasser wurde von Rathsackin fünf Stufen aufgeteilt. Diese Stufen beschreiben die zeitliche Reihenfolge des Bewuchses. Die Effektivität eines chemischen Bewuchsschutzes kann danach beurteilt werden, auf welcher Stufe der Bewuchs stehen bleibt.

Die fünf Stufen der Besiedelung nach Rathsack sind:

- Primärschleim aus Bakterien und wenigen Kieselalgen- (Diatomeen-)arten (Stufe 1)
- Auftreten der Grünalge Ulothrix (Stufe 2)
- Erscheinen von Makroorganismen wie der Grünalge Enteromorpha und des sesshaften Stadiums des Polypen (Hydroiden) Tubularia (Stufe 3)
- Danach folgt die Massenbesiedlung mit Seepocken (Balaniden) oder auch mit der Braunalge Ectocarpus (Stufe 4)
- Schließlich kommen Rotalgen, empfindliche Grünalgen, weitere Braunalgen sowie Moostierchen (Bryozoen), Muscheln (Bivalvia), Röhrenwürmer (Sedentaria) und Seescheiden (Ascidien) hinzu (Stufe 5).

Stufen 1 und 2 werden von Rathsack als "absolut akzeptabel" bzw. "akzeptabel" eingestuft. Stufe 3, also das Auftreten von mehrzelligen Organismen wird als Anzeichen von mangelndem Bewuchsschutz verstanden. Stufen 4 und 5 zeigen "unzureichenden" bzw. "unbrauchbaren" Bewuchsschutz an (Vorstudie 2. Teil, S. 2).

Wurden die erfindungsgemäßen Effektpigmente in eine Antifouling-Beschichtung eingearbeitet und in belebtem Süßwasser (Fluss: Pegnitz, Güntersthal (Hartenstein), Deutschland) angeordnet, so wird deutlich, dass der visuelle Gesamteindruck nach einem Jahr deutlich besser als der einer kommerziell verfügbaren Antifouling-Beschichtung ist. Bedingt durch die plättchenförmige Struktur und der somit höheren Barrierewirkung der erfindungsgemäßen Effektpigmente konnte eine stärkere Enthaftung der Antifouling-Beschichtung vom Untergrund wie beispielsweise bei der Verwendung von annähernd sphärischem Kupferoxid vermieden werden. Demzufolge ist dann auch die Ansiedlung von Bewuchs (Grünalgen) weniger ausgeprägt.

Antifouling-Beschichtungen umfassend die erfindungsgemäßen Effektpigmente, welche in belebtem Salzwasser (Meer: Straße von Singapur)angeordnet wurden, zeigten, dass auch im Meerwasser die bewuchshemmende Wirkung der erfindungsgemäßen Effektpigmente zu beobachten ist. Eine monatliche Auswertung zeigte eine vergleichbare oder bessere bewuchshemmende Eigenschaft als bei kommerziell erhältlichen Antifouling-Beschichtungen.

Bei einer Ausführungsform der Erfindung wird das erfindungsgemäße Effektpigment zusammen mit wenigstens einem weiteren Biozid in Antifouling-Beschichtungen eingesetzt. Vorzugsweise wird als Co-Biozid Zinkpyrithion eingesetzt.

Im Unterschied zu annähernd sphärischen ausschließlich aus Kupfer(I)- bzw. Kupfer(II)oxid bestehenden Partikeln zeichnen sich die auf einem plättchenförmigen nichtmetallischen Substrat basierenden erfindungsgemäßen Effektpigmente durch eine hervorragende, gleichzeitig wirkende Barrierewirkung in Antifouling-Beschichtungen aus. Der Weg des in eine Antifouling-Beschichtung eindringenden Wassers, beispielsweise durch eine unerwünschte Beschädigung der Beschichtung, wird durch die erfindungsgemäßen plättchenförmigen Effektpigmente erschwert.

Sphärische Partikel können einen derartig wirkungsvollen Barriereschutz nicht gewährleisten. Biozid wirkende annähernd sphärische Kupfer(I)- bzw. Kupfer(II)oxidpartikel können sich nach ihrer Freisetzung aus Antifouling-Beschichtungen beispielsweise am Meeresboden absetzen und anreichern.

Anders verhält es sich bei den erfindungsgemäßen Effektpigmenten. Im Idealfall werden diese erst nach kompletter Auflösung der kupferhaltigen Beschichtung aus der Antifouling-Beschichtung herausgelöst, so dass sich hier nur das ungiftige Substrat am Meeresboden absetzt. Vorteilhafterweise wird der Schichtaufbau und/ oder die Zusammensetzung einer Antifouling-Beschichtung derart an die jeweiligen Gegebenheiten angepasst, dass die kupferhaltige Beschichtung des erfindungsgemäßen Effektpigments erst komplett verbraucht ist, bevor das ungiftige Substrat aus der Antifouling-Beschichtung herausgelöst wird und sich am Meeresboden absetzt.

Aufgrund der plättchenförmigen Geometrie der erfindungsgemäßen Effektpigmente verändert sich deren Größe während des Auflösungsvorganges der kupferhaltigen Beschichtung im Unterschied zu sphärischen und massiven kupferhaltigen Partikeln nicht wesentlich.

Bei sphärischen Partikeln besteht der große Nachteil, dass sich der Umfang der sphärischen Partikel während der Auflösung signifikant reduziert und die sphärischen Partikel sodann aus der Matrix der Antifouling-Beschichtung fallen. Gleiches gilt für massive kupferhaltige Plättchen. Mithin kann ein Großteil des Kupfers oder der Kupferverbindungen nicht einem Schutz gegen Bewuchs, beispielsweise eines Schiffsrumpfes, dienen, sondern geht verloren und kontaminiert das Gewässer.

Die erfindungsgemäßen Effektpigmente weisen eine kupferhaltige Verbrauchsschicht auf. Vor Auflösung bzw. Verbrauch der kupferhaltigen Verbrauchsschicht löst sich das erfindungsgemäße Effektpigment aufgrund seiner Größe nicht aus der Antifoulingschicht. Nach der Auflösung der kupferhaltigen Verbrauchsschicht fällt gegebenenfalls das umweltunschädliche plättchenförmige Substrat aus der Matrix der Antifoulingschicht, ohne dass es dabei zu einer Belastung des Gewässers kommt. Da das plättchenförmige nichtmetallische Substrat eine durch Wasser nicht verringerbare Mindestgröße aufweist, fällt das plättchenförmige Substrat nicht notwendigerweise aus der Matrix, in welche die erfindungsgemäßen Effektpigmente eingebettet sind. Somit gewährt das erfindungsgemäße Effektpigment auch nach Auflösung der kupferhaltigen Verbrauchsschicht zumindest teilweise eine Barrierewirkung.

Die Begriffe kupferhaltige Beschichtung und kupferhaltige Verbrauchsschicht werden austauschbar verwendet.

Ein weiterer Vorteil bei Verwendung des erfindungsgemäßen Effektpigmentes ist, dass im Unterschied zu einem sphärischen Teilchen, die Oberfläche während des Auflösungsvorganges nahezu konstant bleibt. Mithin erlaubt das erfindungsgemäße Effektpigment die Einstellung einer weitgehend konstanten Kinetik in Bezug auf die Abgabe von Kupferionen. Bei sphärischen Partikeln oder massiven kupferhaltigen Plättchen kommt es mit der Auflösung zu einer Verringerung der Oberfläche, weshalb keine konstante Abgabe von Kupferionen möglich ist. In Bezug auf die Bereitstellung einer Antifouling-Beschichtung mit weitgehend definierter Kupferionenabgabe und Verwendungsdauer ist die vorliegende Erfindung herkömmlichen sphärischen Kupferpartikeln oder massiven Kupferplättchen weit überlegen.

Eine erfindungsgemäße Antifouling-Beschichtung bewirkt folglich eine, vorzugsweise lang andauernde, Barrierewirkung und das notwendige Inkontaktkommen der kupferhaltigen Schicht des erfindungsgemäßen Effektpigments mit umgebendem Meerwasser.

Damit die bewuchshemmenden Eigenschaften der erfindungsgemäßen Effektpigmente zur Geltung kommen, müssen diese vom Meerwasser umspült werden, um Kupferionen aus der kupferhaltigen Beschichtung freisetzen zu können. Die in einer Antifouling-Beschichtung eingebetteten erfindungsgemäßen Effektpigmente werden kontinuierlich vom Meerwasser umspült, so dass immer Kupferionen aus der kupferhaltigen Beschichtung freigesetzt werden und beispielsweise die Schiffshülle vor einer Besiedelung bewahren. Gleichzeitig wird durch die plättchenförmige Struktur des erfindungsgemäßen Effektpigments ein zu schnelles Eindringen des Meerswassers in die Antifouling-Beschichtung verhindert.

Neben der Barrierewirkung der erfindungsgemäßen Effektpigmente bieten beschichtete plättchenförmige nichtmetallische Substrate gegenüber sphärischen Partikeln weitere Vorteile, wie beispielsweise die je nach Anforderung der jeweiligen Antifouling-Beschichtung wählbare chemische Zusammensetzung und/oder Dicke der Substratbeschichtung. Bei Antifouling-Beschichtungen, welche z.B. durch Abrasion sehr schnell die erfindungsgemäßen Effektpigmente in ihrer Oberfläche freilegen, kann beispielsweise ein erfindungsgemäßes Pigment mit einer sehr geringen kupferhaltigen Belegung erwünscht sein. Gleichzeitig kann ein Pigment, welches sich durch eine hohe Wirksamkeit gegenüber Bewuchsorganismen auszeichnet, durch die Art der Substratbeschichtung ausgewählt werden. Diese einzigartige Kombination aus plättchenförmigem nichtmetallischen Substrat, welches hauptsächlich für die Barrierewirkung verantwortlich ist, und bewuchshemmender Substratbeschichtung, welche je nach Anforderung der jeweiligen Antifouling-Beschichtung ausgewählt werden kann, macht die Verwendung, zusätzlich zu den obengenannten Vorteilen, der entsprechenden Effektpigmente in Antifouling-Beschichtungen sehr attraktiv.

Weiterhin besitzen die erfindungsgemäßen Effektpigmente die typischen Eigenschaften herkömmlicher Perlglanzpigmente, also Transparenz und je nach kupferhaltiger Beschichtung Tiefenglanz. Eine die erfindungsgemäßen Effektpigmente enthaltende Antifouling-Beschichtung muss nicht zwangsläufig den Farbton des Pigments aufweisen, sondern kann in der Farbe des gewünschten Schiffsanstrichs vorliegen. Dies ist insbesondere im Segel- oder Yachtbereich interessant, wo nicht unbedingt ein rotbrauner oder dunkler Antifouling-Anstrich gewünscht ist, sondern eher helle Anstriche bevorzugt sind. Die erfindungsgemäßen Effektpigmente können in Antifouling-Beschichtungen in Abmischung mit weiteren Farb- und/ oder Effektpigmente vorliegen und so das optische Erscheinungsbild eines beispielsweise Schiffsanstrichs deutlich attraktiver gestalten. Dies kann insbesondere für die teilweise auch oberhalb der Wasserlinie liegenden Schiffsteile interessant sein.

Allein schon aus Kostengründen soll eine möglichst lange Haltbarkeit der Antifouling-Beschichtung gewährleistet werden. Zum einen soll die bewuchshemmende Schicht über einen möglichst langen Zeitraum wirken und eine Gewichtszunahme eines Schiffes durch Bewuchs verhindern. Zum anderen soll eine Erneuerung der Antifouling-Beschichtung möglichst selten notwendig werden, um kostenintensive Standzeiten eines Schiffes zu umgehen. Eine über mehrere Jahre wirksame Antifouling-Beschichtung ist daher wünschenswert. Allerdings spielt hierfür neben dem in der Antifouling-Beschichtung eingesetzten Pigment und gegebenenfalls weiterer als Biozid wirkenden Komponente eine Reihe anderer Faktoren eine Rolle. Um nur einige aufzuzählen, sollen hier Art der Antifouling-Beschichtung, die Fahrtgeschwindigkeit eines Schiffes, die Standzeiten, die Temperatur und Zusammensetzung des Meereswassers genannt werden. Diese nur beispielhaft genannten Faktoren zeigen, dass eine Antifouling-Beschichtung für den jeweiligen Einsatzzweck anpassbar sein sollte.

Die erfindungsgemäßen kupferbeschichteten plättchenförmigen Substrate stellen eine umweltfreundlichere Alternative zu ausschließlich aus elementarem Kupfer, Kupfer(I)- bzw. Kupfer(II)oxid bestehenden Partikeln dar. Die erfindungsgemäßen Effektpigmente leisten somit einen wichtigen Beitrag zu einer umweltfreundlichen Antifouling-Beschichtung.

Als Kennwert zur Ermittlung der Pigmentierungshöhe bei identischem Lacksystem kann die sogenannte Ölzahl herangezogen werden. Die Ölzahl gibt die Menge Öl in Gramm an, die gebraucht wird, um 100 g Pigment zu einer zusammenhaftenden, kittartigen Masse zu verarbeiten. Die erfindungsgemäßen Effektpigmente weisen im Vergleich zu annähernd sphärischen Kupfer(I)oxidpartikeln eine höhere Ölzahl auf und können deswegen in geringerer Pigmentierungshöhe eingesetzt werden, ohne dass ihre bewuchshemmenden Eigenschaften beeinträchtigt werden.

Die Schichtdicke der Antifouling-Beschichtung von selbstpolierenden Systemen wie SPC oder CDP nimmt stetig ab, so dass annähernd sphärische Pigmente nicht vollständig in Lösung gehen. Bei Antifouling-Beschichtungen, umfassend die erfindungsgemäßen Effektpigmente, ist die Pigmentdicke bedingt durch das plättchenförmige Substrat deutlich geringer. Somit ist die kupferhaltige Beschichtung des erfindungsgemäßen Effektpigments vorteilhafterweise in der Regel schneller aufgebraucht als der Filmschrumpf der Antifouling-Beschichtung. Eine unnötige Verschmutzung durch nicht benötigte kupferhaltige Beschichtung ist somit gering, da vorzugsweise nur das biologisch unbedenkliche Substrat aus der Antifouling-Beschichtung ins Meer abgegeben wird.

Die plättchenförmige Struktur des erfindungsgemäßen Effektpigments weist eine deutlich größere Oberfläche im Vergleich zu annähernd sphärischen Kupferoxidpartikeln auf. Damit verbunden ist eine höhere bewuchshemmende aktive Oberfläche pro erfindungsgemäßem Effektpigment. Dies hat zur Folge, dass eine geringere Pigmentierungshöhe, d.h. geringere Konzentration an erfindungsgemäßem Effektpigment, in Antifouling-Beschichtungen eine vergleichbare oder bessere bewuchshemmende Eigenschaft aufweist als dies mit annähernd sphärischen Kupferoxidpartikeln möglich wäre. In herkömmlichen Antifouling-Beschichtungen müssen 30 bis 50 Gew.-%, bezogen auf das Gesamtgewicht der Antifouling-Beschichtung, annähernd sphärische Kupferoxidpartikel eingesetzt werden, um eine ausreichende bewuchshemmende Beschichtung aufweisen. Durch den Einsatz der erfindungsgemäßen Effektpigmente kann die Pigmentierungshöhe, d.h. der Gehalt an Pigment in der Antifouling-Beschichtung, auf 10 bis 20 Gew.-%, bezogen auf das Gesamtgewicht der Antifouling-Beschichtung, reduziert werden.

Mithin ermöglicht die vorliegende Erfindung überraschenderweise eine Verringerung des Anteils an einer Antifouling-Beschichtung zuzusetzender bewuchshemmender Komponente um den Faktor 10 bis 1,5, wenn ein sphärisches kupferhaltiges Pigment gegen ein erfindungsgemäßes Effektpigment ausgetauscht wird, wobei jedoch der Schutz vor Bewuchs erhalten bleibt oder vorzugsweise verbessert wird.

Die erfindungsgemäßen Effektpigmente weisen eine kupferhaltige Beschichtung auf. Diese kupferhaltige Beschichtung kann nach chemischer Zusammensetzung und Menge an die Bedürfnisse der jeweiligen Antifouling-Beschichtung individuell angepasst werden, d.h. eine unnötig große Menge an kupferhaltiger Verbindung in einer Antifouling-Beschichtung kann umgangen werden. Erst nachdem die auf dem nichtmetallischen plättchenförmigen Substrat aufgebrachte kupferhaltige Beschichtung vollständig in Lösung gegangen ist, wird das Substrat aus der Antifouling-Beschichtung gegebenenfalls herausgelöst, so dass letztendlich nur ein ungiftiges Substrat in die Meeresumgebung gelangt.

Eine Antifouling-Beschichtung, welche die erfindungsgemäßen Effektpigmente umfasst, enthält zwar eine deutliche geringere Menge an kupferhaltiger Verbindung, dennoch wird eine vergleichbare bewuchshemmende Wirkung wie mit herkömmlichen Antifouling-Beschichtungen erzielt. Eine mögliche Ursache der hervorragenden bewuchshemmenden Wirkung bei Verwendung der erfindungsgemäßen Effektpigmente in Antifouling-Beschichtungen könnte sein, dass idealerweise nur das Substrat der Perlglanzpigmente aus der Antifouling-Beschichtung herausgelöst wird.

Ein weiterer Vorteil der erfindungsgemäßen Effektpigmente ist, dass der Kupfergehalt über den Anteil an kupferhaltiger Beschichtung eingestellt werden kann und somit eine an die jeweilige Verwendung anpassbare bewuchshemmende Komponente in einer Antifouling-Beschichtung vorhanden ist. Mithin ist keine zusätzliche $SiO_2$-Schicht, wie in EP 0 677 989 B1 beschrieben, notwendig, um die Freisetzung an Kupferionen zu kontrollieren.

Gemäß einer weiteren bevorzugten Ausführungsform der Erfindung weisen die erfindungsgemäßen Effektpigmente über der kupferhaltigen Beschichtung keine metalloxidische Beschichtung auf. Mithin ist die kupferhaltige Beschichtung, abgesehen von einer etwaigen organisch-chemischen Oberflächenmodifizierung, die äußerste anorganische Schicht des erfindungsgemäßen Effektpigmentes.

Bei einer weiteren Ausführungsform betrifft die vorliegende Erfindung somit Effektpigmente bestehend aus synthetischen oder natürlichen Glimmerplättchen und wenigstens einer kupferhaltigen Beschichtung aus oder mit Kupferoxychlorid, wobei die mittlere Teilchengröße $D_{50}$ des Effektpigments mehr als 5 $\mu$m beträgt, der Kupfergehalt des Effektpigments in einem Bereich von 3 bis 70 Gew.-%, bezogen auf das Gesamtgewicht des Effektpigments, liegt und die spezifische Kupferoberfläche des Effektpigments, definiert als Quotient aus Kupfergehalt [Gew.-%] und spezifischer Oberfläche nach BET [$m^2/g$],

$$\frac{Kupfergehalt \quad [Gew.-\%]}{BET \quad [\frac{m^2}{g}]}$$

kleiner 60 Gew.-%·g·m$^{-2}$ ist und wobei die kupferhaltige Beschichtung optional oberflächenmodifiziert sein kann.

Bei einer weiteren Ausführungsform betrifft die vorliegende Erfindung Effektpigmente bestehend aus nichtmetallischen plättchenförmigen Substraten und wenigstens einer kupferhaltigen Beschichtung, welche optional mit einer Oberflächenmodifizierung belegt ist, wobei der Chloridgehalt der Effektpigmente bei >0,1 Gew.-%, bevorzugt bei > 0,3 Gew.-%, besonders bevorzugt bei > 1,0 Gew.-% und ganz besonders bevorzugt bei > 2,0 Gew.-%, jeweils bezogen auf das Gesamtgewicht des Effektpigments, liegt.

Bei einer weiteren Ausführungsform betrifft die vorliegende Erfindung Effektpigmente bestehend aus synthetischen oder natürlichen Glimmerplättchen und wenigstens einer kupferhaltigen Beschichtung aus oder mit Kupferoxychlorid sowie optional einer Oberflächenmodifizierung, wobei der Chloridgehalt der Effektpigmente bei > 1,0 Gew.-%, bevorzugt bei > 2 Gew.-%, jeweils bezogen auf das Gesamtgewicht der Effektpigmente, liegt.

Bei einer weiteren Ausführungsform betrifft die Erfindung Effektpigmente bestehend aus einem nichtmetallischen plättchenförmigen Substrat und wenigstens einer kupferhaltigen Beschichtung der allgemeinen Summenformel (I), wobei die kupferhaltige Beschichtung oberflächenmodifiziert ist.

Bei einer weiteren Ausführungsform betrifft die Erfindung Effektpigmente bestehend aus synthetischen oder natürlichen Glimmerplättchen und einer kupferhaltigen Beschichtung mit oder aus metallischem Kupfer, mit oder aus Kupfer(I)oxid/- hydroxid, mit oder aus Kupfer(II)oxid/-hydroxid oder Mischungen davon.

Selbstverständlich kann eine Antifouling-Beschichtung umfassend die erfindungsgemäßen Effektpigmente nicht nur auf Schiffen aller Art aufgebracht werden, sondern auf jeglichen Oberflächen, die in Kontakt mit Süß-, Salzoder Brackwasser kommen können, wie z.B. Bojen, Fischernetzen, Leitern, Brücken, Kränen, Bohrinseln, Gezeitentore, Schleusen, Off-Shore Windkraftanlagen oder Stegen.

Die erfindungsgemäßen Effektpigmente können aber auch in vielen weiteren Anwendungen eingesetzt werden, die nachfolgend nur beispielhaft aufgelistet werden sollen: Kunststoffe, welche antibakterielle oder fungizide Wirkung aufweisen sollen, Lichtschalter, Wandfarben, Treppengeländer, Beschichtungen, Pulverlacke, Textilien, Folien, Verpackungs- und Gewächshausfolien, Holzschutz, Druckfarben, Dachziegel, Emaille.

Bei einer weiteren Ausführungsform betrifft die vorliegende Erfindung die Verwendung eines erfindungsgemäßen Effektpigments in einer Wandfarbe.

Bei einer weiteren Ausführungsform betrifft die vorliegende Erfindung eine Wandfarbe, die ein erfindungsgemäßes Effektpigment umfasst.

Die nachfolgenden Beispiele sollen die vorliegende Erfindung näher beschreiben ohne sie einzuschränken. Alle Prozentangaben sind als Gewichtsprozent zu verstehen.

**I Herstellung von Effektpigmenten umfassend ein plättchenförmiges nichtmetallisches Substrat und eine kupferhaltige Beschichtung**

**Beispiel 1**

300 g Muskovit-Glimmer der Partikelgrößenverteilung nach MALVERN Mastersizer 2000: $D_{10}$=18 $\mu$m, $D_{50}$=38 $\mu$m, $D_{90}$=70 $\mu$m wurde in 4000 ml VE-Wasser (VE = vollentsalzt) suspendiert und unter Rühren auf 60°C erhitzt. Der pH-Wert wurde mit 5 Gew.-%iger NaOH-Lösung auf 10 angehoben und die Suspension 15 min gerührt. Sodann wurden 1500ml einer 12 Gew.-%igen Kupferchloridlösung in die Suspension hinzudosiert. Der pH-Wert wurde dabei durch Gegensteuern mit einer Lauge konstant auf pH 10 gehalten. Nach dem Ende der Zudosierung wurde 200 min nachgerührt, abfiltriert und der Filterkuchen mit VE-Wasser (vollentsalztem Wasser) nachgewaschen. Der Filterkuchen wurde bei 50°C unter Luftausschluss getrocknet. Das erhaltene Effektpigment besaß einen rötlich braunen Farbton und eine Partikelgrößenverteilung (Cilas 1064) von $D_{10}$ = 22 $\mu$m, $D_{50}$ = 44 $\mu$m und $D_{90}$ = 75 $\mu$m. Der Kupfergehalt dieses Effektpigments lag bei 24 Gew.-%, bezogen auf das Gesamtgewicht des Effektpigments. Die kupferhaltige Beschichtung lag vorwiegend amorph vor und ließ keine Bandenanalyse über RDF (Röntgenstrukturanalyse) zu.

**Beispiel 2**

Ein Teil des Effektpigmentes aus Beispiel 1 wurde unter Sauerstoffausschluss bei 400°C im Drehrohrofen 3h kalziniert und anschließend unter Inertgasatmosphäre gelagert.

Das erhaltene Effektpigment besaß einen rötlich braunen Farbton und eine Partikelgrößenverteilung (Cilas 1064) von $D_{10}$ = 21 $\mu$m, $D_{50}$ = 42 $\mu$m und $D_{90}$ = 69 $\mu$m. Der Kupfergehalt dieses Effektpigments lag bei 24 Gew.-%, bezogen auf das Gesamtgewicht des Effektpigments. Der Hauptbestandteil der kupferhaltigen Beschichtung bestand aus Kupfer(II)oxid (CuO). Daneben konnte auch ein Anteil an Kupfer(I)oxid nachgewiesen werden.

**Beispiel 3**

Ein Teil des Effektpigmentes aus Beispiel 1 wurde unter reduzierenden Bedingungen bei 400°C im Drehrohrofen 3h kalziniert und anschließend unter Inertgasatmosphäre gelagert.

Das erhaltene Effektpigment besaß einen rötlichen Farbton und eine Partikelgrößenverteilung (Cilas 1064) von $D_{10}$ = 19 $\mu$m, $D_{50}$ = 39 $\mu$m und $D_{90}$ = 77 $\mu$m, Der Kupfergehalt dieses Effektpigments lag bei 25 Gew.-%, bezogen auf das Gesamtgewicht des Effektpigments. Der Hauptbestandteil der kupferhaltigen Beschichtung bestand aus metallischem Kupfer. Daneben konnte auch ein Anteil an Kupfer(II)oxid nachgewiesen werden.

**Beispiel 4**

300 g Muskovit-Glimmer der Partikelgrößenverteilung nach MALVERN Mastersizer 2000: $D_{10}$=18 $\mu$m, $D_{50}$=38 $\mu$m, $D_{90}$=70 $\mu$m wurde in 4000ml VE-Wasser suspendiert und unter Rühren auf 90°C erhitzt. Der pH-Wert wurde mit 5 Gew.-%iger NaOH-Lösung auf 9,0 angehoben und die Suspension 15 min gerührt. Sodann wurden 1650 ml einer 20 Gew.-%igen Kupferchlorid-Lösung in die Suspension hinzudosiert. Der pH-Wert wurde dabei durch Gegensteuern mit einer Lauge konstant auf pH 9,0 gehalten. Nach dem Ende der Zudosierung wurde 300 min nachgerührt, abfiltriert und der Filterkuchen mit VE-Wasser nachgewaschen. Der Filterkuchen wurde bei 50°C getrocknet.

Das erhaltene Effektpigment besaß einen dunkelbraunen Farbton und eine Partikelgrößenverteilung (Cilas 1064) von $D_{10}$ = 18 $\mu$m, $D_{50}$ = 40 $\mu$m und $D_{90}$ = 79 $\mu$m.Der Kupfergehalt dieses Effektpigments lag bei 24 Gew.-%, bezogen auf das Gesamtgewicht des Effektpigments. Die kupferhaltige Beschichtung lag vorwiegend amorph vor und ließ keine Bandenanalyse über RDF zu.

**Beispiel 5**

Ein Teil des Effektpigmentes aus Beispiel 4 wurde bei 400°C im Drehrohrofen 3h kalziniert.

Das erhaltene Effektpigment besaß einen schwarzen Farbton und eine Partikelgrößenverteilung (Cilas 1064) von $D_{10}$ = 19 $\mu$m, $D_{50}$ = 40 $\mu$m und $D_{90}$ = 66 $\mu$m. Der Kupfergehalt dieses Effektpigments lag bei 29 Gew.-%, bezogen auf das Gesamtgewicht des Effektpigments. Der Hauptbestandteil der kupferhaltigen Beschichtung bestand aus Kupfer(II)oxid (CuO). Daneben konnte auch ein geringer Anteil an Kupferoxychlorid nachgewiesen werden.

**Beispiel 6**

555g einer 21Gew.-%igen Kupferchlorid-Lösung wurden in einem 3l-Planschliffreaktionsgefäß vorgelegt und

2000 g einer 18 Gew.-%igen alkalischen Seignettesalzlösung unter Rühren hinzu gegeben. Anschließend wurde unter Rühren portionsweise 100g Muskovit-Glimmer der Partikelgrößenverteilung nach MALVERN Mastersizer 2000: $D_{10}$=18 $\mu$m, $D_{50}$=38 $\mu$m, $D_{90}$=70 $\mu$m, hinzu gegeben und die Suspension auf 60°C erwärmt. Bei dieser Temperatur wurde70 g D(+)-Glucose, gelöst in 230 ml VE-Wasser, zugegeben. Nach beendeter Reaktion wurde die Suspension abfiltriert und mit VE-Wasser bis zur Neutralität gewaschen.

Der so erhaltene Filterkuchen wurde bei 50°C unter Luftausschluss im Trockenschrank getrocknet und das resultierende Effektpigment unter Inertgasatmosphäre gelagert.

Das erhaltene Effektpigment besaß einen roten Farbton und eine Partikelgrößenverteilung (Cilas 1064) von $D_{10}$ = 20 $\mu$m, $D_{50}$ = 42 $\mu$m und $D_{90}$ = 81 $\mu$m. Der Kupfergehalt dieses Effektpigments lag bei 30 Gew.-%, bezogen auf das Gesamtgewicht des Effektpigments. Der Hauptbestandteil der kupferhaltigen Beschichtung bestand aus metallischem Kupfer. Daneben konnte auch ein Anteil an Kupfer(II)oxid nachgewiesen werden.

**Beispiel 7**

300 g Muskovit-Glimmer der Partikelgrößenverteilung nach MALVERN Mastersizer 2000: $D_{10}$=18 $\mu$m, $D_{50}$=38 $\mu$m, $D_{90}$=70 $\mu$m wurde in 4000 ml VE-Wasser suspendiert und unter Rühren auf 60°C erhitzt. Der pH-Wert wurde mit 5 Gew.-%iger Salzsäurelösung auf 7,5 eingestellt und die Suspension 60min gerührt. Sodann wurden 1500 ml einer 12 Gew.-%igen Kupferchlorid-Lösung in die Suspension hinzudosiert. Der pH-Wert wurde dabei durch Gegensteuern einer entsprechenden Lauge konstant auf pH 7,5 gehalten. Nach dem Ende der Zudosierung wurde 200 min nachgerührt, abfiltriert und der Filterkuchen mit VE-Wasser nachgewaschen. Der Filterkuchen wurde bei 50°C unter Luftausschluss getrocknet.

Das erhaltene Effektpigment besaß einen fahlgrünen Farbton und eine Partikelgrößenverteilung (Cilas 1064) von $D_{10}$ = 7 $\mu$m, $D_{50}$ = 45 $\mu$m und $D_{90}$ = 88 $\mu$m. Der Kupfergehalt dieses Effektpigments lag bei 23 Gew.-%, bezogen auf das Gesamtgewicht des Effektpigments. Der Hauptbestandteil der kupferhaltigen Beschichtung bestand aus Kupferoxychlorid.

**Beispiel 8**

100 g Muskovit-Glimmer der Partikelgrößenverteilung nach MALVERN Mastersizer 2000: $D_{10}$=18 $\mu$m, $D_{50}$=38 $\mu$m, $D_{90}$=70 $\mu$m wurde in 1200 ml VE-Wasser suspendiert und unter Rühren auf 60°C erhitzt. Der pH-Wert wurde mit 5 Gew.-%iger NaOH-Lösung auf 8,5 eingestellt und die Suspension 15 min gerührt. Sodann wurden 600 ml einer 10 Gew.-%igen Kupferchlorid-Lösung, versetzt mit 0,3mol $ZnCl_2$, in die Suspension zudosiert. Der pH-Wert wurde dabei durch Gegensteuern einer entsprechenden Lauge konstant auf pH 8,5 gehalten. Nach dem Ende der Zudosierung wurde 200 min nachgerührt, abfiltriert und der Filterkuchen mit VE-Wasser nachgewaschen. Der Filterkuchen wurde bei 150°C unter Luftausschluss getrocknet.

Das erhaltene Effektpigment besaß einen bläulichen Farbton und eine Partikelgrößenverteilung (Cilas 1064) von $D_{10}$ = 6 $\mu$m, $D_{50}$ = 43 $\mu$m und $D_{90}$ = 87 $\mu$m. Der Kupfergehalt sowie der Zinkoxidgehalt dieses Effektpigments lagen bei 19 Gew.-% bzw. 12 Gew.-%, jeweils bezogen auf das Gesamtgewicht des Effektpigments. Der Hauptbestandteil der kupferhaltigen Beschichtung konnte als zinkhaltiges Kupferoxychlorid nachgewiesen werden, wobei der Zinkoxidgehalt (ZnO) gemäß RFA (Röntgenfluoreszenzanalyse) bei 11,5 Gew.-% lag.

**Beispiel 9**

50g des Effektpigmentes aus Beispiel 7 wurden mit 10g einer 10 Gew.-%igen Lösung aus Ölsäure in Ethylacetat händisch angepastet und gut homogenisiert. Die resultierende Paste wurde bei 80°C im Vakuumtrockenschrank getrocknet.

**Vergleichsbeispiel 1**

100g Effektpigment aus Beispiel 2 wurden in 1500 ml VE-Wasser suspendiert und unter Rühren auf 60°C erhitzt. Der pH-Wert der Suspension wurde mit 5 Gew.-%iger NaOH-Lösung auf 7,5 angehoben und 15 min gerührt. Eine Wasserglaslösung (76,5 g Wasserglaslösung, 20 Gew.-% $SiO_2$, gemischt mit 104 g VE-Wasser) wurde

sodann langsam in die Suspension eingeleitet und der pH-Wert konstant bei pH 7,5 gehalten.

Danach wurde noch 15 min nachgerührt, abfiltriert und der Filterkuchen mit VE-Wasser nachgewaschen. Der Filterkuchen wurde bei 130°C unter Intertgasatmosphäre getrocknet, und unter Luftausschluss gelagert.

Das erhaltene Effektpigment besaß einen rötlich braunen Farbton und eine Partikelgrößenverteilung (Cilas 1064) von $D_{10}$ = 20 $\mu$m, $D_{50}$ = 42 $\mu$m und $D_{90}$ = 81 $\mu$m. Der Kupfergehalt dieses Effektpigments lag bei 21 Gew.-%, bezogen auf das Gesamtgewicht des Effektpigments.

**Vergleichsbeispiel 2**

Di-Kupferoxid mit einem Kupfergehalt von 88 Gew.-%, bezogen auf das Gesamtgewicht des Pigments, und einer Partikelgrößenverteilung (Cilas 1064) von $D_{10}$ = 1,1 $\mu$m, $D_{50}$ = 4,0 $\mu$m und $D_{90}$ = 6,6 $\mu$m (Fa. Spiess Urania, Hamburg).

**Vergleichsbeispiel 3**

Metallisches Kupferpigment STANDART Resist LT(Fa. Eckart GmbH, Güntersthal) mit einem Kupfergehalt von 94 Gew.-%, bezogen auf das Gesamtgewicht des Pigments, und mit einer Partikelgrößenverteilung (Cilas 1064) von $D_{10}$ = 19 $\mu$m, $D_{50}$ = 45 $\mu$m und $D_{90}$ = 82 $\mu$m.

**Vergleichsbeispiel4**

Metallisches Kupferpigment STANDART L 900(Fa. Eckart GmbH, Güntersthal) mit einem Kupfergehalt von 99 Gew.-%, bezogen auf das Gesamtgewicht des Pigments, und einer Partikelgrößenverteilung (Cilas 1064) von $D_{10}$ = 19 $\mu$m, $D_{50}$ = 40 $\mu$m und $D_{90}$ = 72 $\mu$m.

**Vergleichsbeispiel 5**

Oxidativ gefärbtes Goldbronzepigment STANDART E900 (Fa. Eckart GmbH, Güntersthal)mit einem Kupfergehalt von 96 Gew.-%, bezogen auf das Gesamtgewicht des Pigments, und einer Partikelgrößenverteilung (Cilas 1064) von $D_{10}$ = 8 $\mu$m, $D_{50}$ = 19 $\mu$m und $D_{90}$ = 35$\mu$m.

**II Charakterisierung der Effektpigmente**

**IIa Teilchengrößenmessung**

Die Größenverteilungskurve der erfindungsgemäßen Effektpigmente sowie der Pigmente der Vergleichsbeispiele wurden mit einem Gerät der Fa. Quantachrome (Cilas 1064) gemäß Herstellerangaben vermessen. Hierzu wurden ca. 1,5 g des jeweiligen Pigmentes in 100 ml Isopropanol suspendiert, 300 Sekunden im Ultraschallbad behandelt und anschließend mittels einer Pasteurpipette in die Probenvorbereitungszelle des Messgerätes gegeben und mehrmals vermessen. Aus den einzelnen Messergebnissen wurden die Mittelwerte gebildet. Die Auswertung der Streulichtsignale erfolgte dabei nach der Fraunhofer Methode.

Die Größenverteilungskurve der plättchenförmigen nichtmetallischen Substrate wurde mit einem Gerät der Fa. Malvern (Mastersizer 2000) gemäß Herstellerangaben bestimmt. Hierzu wurden ca. 0,1 g des entsprechenden Substrats als wässrige Suspension, ohne Zusatz von Dispergierhilfsmitteln, unter ständigem Rühren mittels einer Pasteurpipette in die Probenvorbereitungszelle des Messgerätes gegeben und mehrmals vermessen. Aus den einzelnen Messergebnissen wurden die Mittelwerte gebildet. Die Auswertung der Streulichtsignale erfolgte dabei nach der Fraunhofer Methode.

Unter der mittleren Partikelgröße $D_{50}$ wird im Rahmen dieser Erfindung der $D_{50}$-Wert der Summenhäufigkeitsverteilung der volumengemittelten Größenverteilungsfunktion, wie sie durch Laserbeugungsmethoden erhalten werden, verstanden. Der $D_{50}$-Wert gibt an, dass 50% der Effektpigmente bzw. der plättchenförmigen nichtmetallischen Substrate einen Durchmesser aufweisen, der gleich oder kleiner als der angegebene Wert, beispielsweise 20 $\mu$m, ist. Entsprechend gibt der $D_{90}$-Wert an, dass 90% der Effektpigmente bzw. der plättchenförmigen nichtmetallischen Substrate einen Durchmesser aufweisen, der gleich oder kleiner als der jeweilige Wert ist. Weiterhin gibt der $D_{10}$-Wert an, dass 10% der Effektpigmente bzw, der plättchenförmigen nichtmetallischen Substrate einen Durchmesser aufweisen, der gleich oder kleiner als der jeweilige Wert ist.

**IIb Rasterelektronenmikroskopische Aufnahmen**

Die Bestimmung der mittleren Dicke der erfindungsgemäßen Effektpigmente bzw. der Pigmente der Vergleichsbeispiele erfolgte über rasterelektronenmikroskopische Aufnahmen mit dem Rasterelektronenmikroskop Supra 35 (Fa. Zeiss).Hierzu wurde ein in der Elektronenmikroskopie übliches Harz, beispielsweise TEMPFIX (Gerhard Neubauer Chemikalien) auf einen Probenteller aufgebracht und auf einer Heizplatte bis zum Erweichen erhitzt. Nachfolgend wurde der Probenteller von der Heizplatte genommen und das jeweilige Pigment auf das erweichte Harz gestreut. Nach Abkühlung des Harzes waren die jeweiligen Pigmente fast senkrecht stehend im Harz fixiert. Bei der rasterelektronischen Vermessung wurde der azimuthale Winkel $\alpha$ der im Harz fixierten Pigmente zu einer zur Oberfläche normalen Ebene geschätzt und bei der Dickenauswertung gemäß h = $h_{mess}$/cos $\alpha$ berücksichtigt. Zur Bestimmung der mittleren Dicke h wurden mindestens 100 Pigmentteilchen der erfindungsgemäßen Effektpigmente bzw. der Pigmente der Vergleichsbeispiele herangezogen.

Sofern, aufgrund des Gewichts der erfindungsgemäßen Effektpigmente, deren mittlere Dicke h nicht über die Spreitwertmethode bestimmbar ist, wurde die mittlere Dicke h anhand von rasterelektronischen Aufnahmen ermittelt.

### IIc Spreitwert/ Aspektverhältnis

Die Spreitwertmethode ist seit langem zur Dickenbestimmung von plättchenförmigen Effektpigmenten bekannt. Die DIN 55923 gibt eine Vorschrift zur Messung des Wasserbedeckungsgrades (Spreitung) von "leafing"-Pigmenten an. In Anlehnung hieran wurden die erfindungsgemäßen Effektpigmente und Pigmente der Vergleichsbeispiele in einer 10 %-igen Stearinsäurelösung in Isopropanol dispergiert und 15 min lang gerührt. Dann wurden sie von der Lösung durch Filtration getrennt und getrocknet. Durch diese Vorgehensweise wird Stearinsäure auf den jeweiligen Pigmenten adsorbiert, was diesen "leafing"-Eigenschaften verleiht.

Anschließend wurde eine definierte Einwaage derart behandelter Pigmente in einem leicht flüchtigen organischen Lösemittel auf eine Wasseroberfläche in einer Wanne aufgegeben. Die Pigmente spreiteten auf der Wasseroberfläche und bildeten einen Film. Durch Rühren mit einem Glasstab wurden sie zu einem gleichmäßigen lückenlosen Film verteilt. Anschließend wurde der Film durch zwei Lineale zusammengedrückt, bis er erste Falten aufwies. Dann wurde der Film wieder soweit entspannt, bis die Falten verschwanden. Die vom Film bedeckte Fläche wurde ausgemessen und anhand der Einwaage des Pigmentes als Spreitwert in cm$^2$/g (oder auch in m$^2$/g) angegeben.

Bei dieser Methode wird unterstellt, dass sich die Pigmente zumindest im Mittel im Film einzeln nebeneinander anordnen und mithin in einer einzigen "Monolage" Pigmente vorliegen.

**Tabelle 1:** Spreitwerte und Aspektverhältnisse der Beispiele und Vergleichsbeispiele

| Beispiel/ Vergleichsbeispiel | Spreitwert [cm$^2$/g] | Aspektverhältnis |
|---|---|---|
| Beispiel 1 | 6400 | 85 |
| Beispiel 2 | 6200 | 78 |
| Beispiel 3 | 7700 | 90 |
| Beispiel 4 | 9900 | 119 |
| Beispiel 5 | 9800 | 118 |
| Beispiel 6 | 5100 | 64 |
| Beispiel 7 | 5700 | 77 |
| Beispiel 8 | 6300 | 81 |
| Vergleichsbeispiel 2 | 3300 | 8 |

Anhand dieses Spreitwertes errechnet sich die mittlere Dicke h in nm der Pigmente nach der folgenden Formel:

$$h = \frac{10^7 \, (nm/cm)}{\rho(g/cm^3) * Spreitwert(cm^2/g)}$$

wobei $\rho$ die physikalische Reindichte des mit Stearinsäure adsorbierten Pigmentes ist.

Die Bestimmung der Dichte erfolgte hierbei über ein Heliumpyknometer (Multipycnometer, Fa. Quantachrome). Die Messung eignet sich für die genaue Dichtebestimmung von Pulvern sowie von porösen und unregelmäßig geformten Feststoffen. Hierbei wurde der Druckverlust eines Helium-Referenzvolumens ermittelt und daraus auf das Volumen der Probe geschlossen. Dieses wurde in Bezug zum jeweiligen Gewicht der Einwaage gesetzt. Die Dichte ist abhängig vom Kupfergehalt des jeweiligen Pigments. Für Beispiel 7 wurde die Dichte von 3,0 g/cm$^2$ experimentell bestimmt. Dieser Wert wurde zur Berechnung der mittleren Dicke und des Aspektverhältnisses aller erfindungsgemäßen Effektpigmente zugrunde gelegt. Für die Berechnung des Aspektverhältnisses von Vergleichsbeispiel 2 wurde eine Dichte von 6,0 g/cm$^2$ zugrunde gelegt.

Das Aspektverhältnis ist definiert als Verhältnis von mittlerer Teilchengröße $D_{50}$ zu mittlerer Dicke h.

**IId Bestimmung der spezifischen Oberfläche nach BET**

Zur Bestimmung der spezifischen Oberfläche nach BET (Gerät: BELsorp mini II, Firma BEL) wurden die erfindungsgemäßen Effektpigmente bzw. Pigmente der Vergleichsbeispiele 2h lang bei 300°C ausgeheizt und anschließend der Bestimmung, welche mittels flüssigem Stickstoff erfolgte, zugeführt.

**IIe Bestimmung des Kupfergehalts**

Die jodometrische Bestimmung des Kupfergehalts der erfindungsgemäßen Effektpigmente bzw. Pigmente der Vergleichsbeispiele erfolgte durch Titration. Alternativ kann der Kupfergehalt auch über Röntgenfluoreszenzanalyse (RFA) bestimmt werden. Vorzugsweise erfolgte die Bestimmung des Kupfergehalts jedoch durch Titration.

**IIf Ölzahl**

Die Ölzahl gibt die Menge Öl in Gramm an, die gebraucht wird, um 100 g Pigment zu einer zusammenhaftenden, kittartigen Masse zu verarbeiten. Diese Ölmenge hängt stark von der Art und Weise ab, in der das Öl eingearbeitet wird. Der Streubereich der Prüfergebnisse ist deshalb recht groß. Die Werte sind nur dann vergleichbar, wenn sie von demselbenPrüfer nach dem gleichen Verfahren möglichst kurz nacheinander ermittelt wurden. Zur Bestimmung der Ölzahl wurden ca. 2-5 g Pigment (genau abgewogen) unter Zusatz einer abgemessenen Menge Leinöl auf einer Glasplatte mit dem Spatelangepastet und so lange aus einer Bürette Leinöl hinzugefügt, bis eine homogene, zusammenhaftende, kittartige Masse entstanden ist. Diese Paste sollte sich gerade noch ohne zu reißen oder zukrümeln verteilen lassen und gerade noch auf der Platte haften. Es wurde berechnet, wie viel Gramm Leinöl (Dichte 0,93 g/m$^3$) für100 g Pigment benötigt werden.

| Beispiel/ Vergleichsbeispiel | Ölzahl |
|---|---|
| Beispiel 4 | 100 |
| Beispiel 7 | 90 |
| Beispiel 8 | 90 |
| Beispiel 9 | 70 |
| Vergleichsbeispiel 2 | 15 |

Ein Vergleich der Ölzahlen zeigte, dass die erfindungsgemäßen Effektpigmente eine deutlich höhere Ölzahl aufwiesen, als das annähernd sphärische Pigment aus Vergleichsbeispiel 2. Durch eine zusätzliche Oberflächenbelegung wie in Beispiel 9 konnte die Ölzahl deutlich verringert werden, was eine höhere Pigmentvolumenkonzentration im Lack ermöglicht.

**IIg Röntgenfluoreszenzanalyse (RFA)**

Der Metalloxidgehalt, insbesondere der Zinkoxidgehalt, sowie der Chloridgehalt der erfindungsgemäßen Effektpigmente sowie der Pigmente der Vergleichsbeispiele wurden mittels Röntgenfluoreszenzanalyse (RFA) bestimmt.
Hierzu wurde das jeweilige Pigment in eine Lithiumtetraboratglastablette eingearbeitet, in Festprobenmessbechern fixiert und daraus vermessen. Als Messgerät diente das Gerät Advantix ARL, Fa. Thermo Scientific.

**Tabelle 2:** Kupfergehalt, spezifische Kupferoberfläche, Chloridgehalt der Pigmente der Beispiele und Vergleichsbeispiele

| Beispiel/ Vergleichsbeispiel | Kupfergehalt [Gew.-%] | spezifische Kupferoberfläche [Gew.-%·g·m$^{-2}$] | Chloridgehalt [Gew.-%] |
|---|---|---|---|
| Beispiel 1 | 24 | 6 | 1,2 |
| Beispiel 2 | 24 | 8 | |
| Beispiel 3 | 25 | 7 | |
| Beispiel 4 | 24 | 3 | 4,2 |
| Beispiel 5 | 29 | 7 | |

(fortgesetzt)

| Beispiel/ Vergleichsbeispiel | Kupfergehalt [Gew.-%] | spezifische Kupferoberfläche [Gew.-%·g·m$^{-2}$] | Chloridgehalt [Gew.-%] |
|---|---|---|---|
| Beispiel 6 | 30 | 16 | 50 ppm |
| Beispiel 7 | 23 | 6 | 4,4 |
| Beispiel 8 | 19 | 5 | 6,3 |
| Vergleichsbeispiel 2 | 88 | 125 | 0,2 |
| Vergleichsbeispiel 3 | 94 | 174 | - |
| Vergleichsbeispiel 4 | 99 | 152 | <0,01 |
| Vergleichsbeispiel 5 | 24 | 68 | - |

**IIh Röntgenstrukturanalyse (RDF)**

Die chemische Zusammensetzung der Beschichtung der erfindungsgemäßen Effektpigmente wurde mittels Röntgenstrukturanalyse ermittelt.

**Iii Deckfähigkeit / Bestimmung des Deckungsquotienten**

Die Deckfähigkeit der erfindungsgemäßen Effektpigmente und Pigmente der Vergleichsbeispiele wurde anhand von Lackapplikationen auf Schwarz-Weiß-Deckungskarten (Byko Chart 2853, Fa. Byk Gardner, Geretsried, Deutschland) bestimmt. Das jeweilige Pigment wurde in einer Pigmentierungshöhe von 10 Gew.-% (bezogen auf das Gesamtgewichtes des Nasslacks in einen konventionellen Nitrocelluloselack (Dr. Renger Erco Bronzemischlack 2615e; Fa. Morton) eingerührt. Dabei wurde das jeweilige Pigment vorgelegt und anschließend mit einem Pinsel in den Lack dispergiert. Der fertige Lack wurde auf einem Rakelabzugsgerät mit einer Nassfilmdicke von 36 μm auf Schwarz-Weiß-Deckungskartenappliziert.

Die Helligkeitswerte L* wurden bei einer Messgeometrie von 110°, relativ zum Ausfallwinkel des bei 45° eingestrahlten Lichts, anhand dieser Lackapplikationen auf dem schwarzem und auf dem weißem Hintergrund der Schwarz-Weiß-Deckungskarte mit dem Gerät BYK-mac, Fa. Byk Gardner, vermessen.

Durch Bildung des Deckungsquotienten Dq lassen sich vom Untergrund unabhängige Maßzahlen für die Deckfähigkeit der Pigmente ermitteln. Hierzu wird der Quotient der Helligkeitswerte auf schwarzem Hintergrund zu den Helligkeitswerten auf weißem Hintergrund der Schwarz-Weiß-Deckungskarte berechnet:

$$Dq = \frac{L*_{110,schwarz}}{L*_{110,weiß}}$$

Bei Verwendung identischer Lacksysteme erlaubt der Deckungsquotient den Vergleich der Deckfähigkeit von verschiedenen Effektpigmenten zueinander.

Je mehr sich der Wert des Deckungsquotienten Dq 1 nähert, desto deckfähiger erscheint das entsprechende Pigment einem Betrachter bei identischer Pigmentierungshöhe in Gew.-%.

**Tabelle3:** Deckungsquotient der Pigmente aus den Beispielen/ Vergleichsbeispielen

| Beispiel/ Vergleichsbeispiel | Deckungsquotient (1 0%Pigment in NC-Lack) |
|---|---|
| | $L_{110(schwarz)}$ / $L_{110(weiß)}$ |
| Beispiel 1 | 0,49 |
| Beispiel 2 | 0,47 |
| Beispiel 6 | 0,41 |
| Beispiel 7 | 0,51 |
| Beispiel 8 | 0,51 |
| Vergleichsbeispiel 3 | 0,73 |

(fortgesetzt)

| Beispiel/ Vergleichsbeispiel | Deckungsquotient (1 0%Pigment in NC-Lack) |
|---|---|
| | $L_{110(schwarz)}$ / $L_{110(weiß)}$ |
| Vergleichsbeispiel 4 | 0,77 |
| Vergleichsbeispiel 5 | 0,97 |

Aus Tabelle 2 wird ersichtlich, dass die erfindungsgemäßen Effektpigmente deutlich transparenter als herkömmliche Kupfer- oder Kupferlegierungspigmente (Vergleichsbeispiele 3,4 und 5) sind.

**IIj Glanzmessungen**

Der Glanz ist ein Maß für die gerichtete Reflexion und lässt sich mittels eines Micro-Tri-Gloss-Gerätes genau charakterisieren. Stärker streuende Proben sollten aufgrund von vermehrter Kantenstreuung sowie Pigmentunebenheiten einen niedrigen Glanz aufweisen.

Es wurden die Lackapplikationen auf Scharz-Weiß-Deckungskarten mit Hilfe eines Micro-Tri-Gioss Glanzmessgerätes, Fa. Byk Gardner, bei einem Messwinkel von 60° bezogen auf die Vertikale vermessen. Die jeweiligen Pigmente wurden in einen konventionellen Nitrocelluloselack (Dr. Renger Erco Bronzemischlack 2615e; Fa. Morton, Pigmentierungshöhe 10 Gew.-%, bezogen auf das Gesamtgewicht des Nitrocelluloselacks) eingerührt. Der fertige Lack wurde mit einem Rakelabzugsgerät mit einer Nassfilmdicke von 36 μm auf Schwarz-Weiß-Deckungskarten (Byko-Chart 2853, Fa. Byk-Gardner) appliziert.

**Tabelle4:** Glanzwerte der Pigmente der Beispiele und Vergleichsbeispiele, vermessen bei 60° auf schwarzem Untergrund der Schwarz-Weiß-Deckungskarte

| Beispiel/ Vergleichsbeispiel | Glanz 60° |
|---|---|
| Beispiel 1 | 15,8 |
| Beispiel 2 | 23,3 |
| Beispiel 3 | 27,2 |
| Beispiel 4 | 28,5 |
| Beispiel 5 | 23,1 |
| Beispiel 6 | 18,5 |
| Beispiel 7 | 5,4 |
| Beispiel 8 | 5,2 |
| Vergleichsbeispiel 3 | 72,8 |
| Vergleichsbeispiel 4 | 77,5 |
| Vergleichsbeispiel 5 | 37,4 |

Im Vergleich zu Kupfer- bzw. Kupferlegierungspigmenten der Vergleichsbeispiele weisen die erfindungsgemäßen Effektpigmente deutlich geringere Glanzwerte auf. Somit treten diese Effektpigmente bei der Applikation nicht als Glanzpigment auf. Dem Anwender eröffnet sich hiermit die Möglichkeit, matte Farbtöne in den verschiedensten, insbesondere auch in hellen Farbnuancen bereitzustellen.

**IIk Farbtonkonstanz**

Zur Ermittlung der Farbtonkonstanz wurden die Pigmente in der kolophoniumharzbasierenden Antifouling-Beschichtung gemäß anwendungstechnischem Beispiel 1 anstelle des dort verwendeten Pigments gemäß Beispiel 1 eingearbeitet. Die Pigmentierungshöhe in Tabelle 5 ist in Gew.-%, bezogen auf das Gesamtgewicht der Antifouling-Beschichtung, angegeben.

Die erhaltene pigmentierte Antifouling-Beschichtung wurde mittels einer HVLP-Spritzpistole (Sata Jet 3000, Fa. Sata) mit einer Nassfilmstärke von 200μm auf Aluminiumbleche appliziert. Nach einer Lagerung von einer Woche bei 20°C und einer relativen Luftfeuchte von 65% wurde eine Fläche von 20 cm$^2$ mit einer 5 Gew.-%ige NaCl-Lösung kontinuierlich bei einer Temperatur von 50°C über einen Zeitraum von 1 Woche belastet.

Sowohl von der unbelasteten Fläche als auch von der belasteten Fläche wurden nach Beendigung des Tests Farbmessungen mit dem Gerät Byk-mac (Fa. Byk Gardner) durchgeführt. Der Farbtonunterschied zwischen den beiden gemessenen Flächen ist in Tabelle 5 als ΔL* bei unterschiedlichen Winkeln dargestellt, wobei als Referenz die unbelastete Fläche diente.

**Tabelle 5:** Farbtonunterschied ΔL*

| Antifouling-Beschichtung | Pigment/ Pigmentierungshöhe | ΔL* 15° | ΔL* 25° | ΔL* 45° | ΔL* 75° | ΔL* 110° |
|---|---|---|---|---|---|---|
| anwendungstechnisches Beispiel 1 | Beispiel 1/ 20 Gew.-% | -5,9 | 3,0 | 3,2 | 3,8 | 4,0 |
| anwendungstechnisches Beispiel 1 | Beispiel 2/ 20 Gew.-% | 4,5 | 4,9 | 5,5 | 6,2 | 6,6 |
| anwendungstechnisches Beispiel 1 | Beispiel 5/ 20 Gew.-% | 5,9 | 5,1 | 4,6 | 5,1 | 5,1 |
| anwendungstechisches Beispiel 1 | Beispiel 8/ 20 Gew.-% | 0,5 | -0,8 | -1,8 | -2,4 | -3,4 |
| Sigma Eco Fleet 530 Redbrown [1] | - | -9,2 | -3,1 | 5,9 | 8,7 | 9,4 |
| [1]Fa. Sigma Coatings | | | | | | |

**III Farbstärke**

Es wurden Lackapplikationen auf Scharz-Weiß-Deckungskarten (Byko Cart 2853, Fa. Byk-Gardner) mit Hilfe eines X-rite Farbmessgeräts, Fa. X-rite, bei den Messwinkeln von 25°, 45°, 75°, auf schwarzem und weißem Untergrund, vermessen. Die jeweiligen Pigmente wurden mit einer weißen Farbpaste (Helio Beit UN 101; Fa. Bollig & Kemper) in einer Pigmentierungshöhe von 23 Gew.-%, bezogen auf das Gesamtgewicht der weißen Farbpaste, vermischt. Die so erhaltene Farbpaste wurde in einen konventionellen Metalleffektbasislack (Mipa-Mischlack; Fa. Mipa, Pigmentierungshöhe 33 Gew.-%, bezogen auf das Gesamtgewicht des Mipa-Mischlacks) eingerührt. Der fertige Lack wurde mit einem Rakelabzugsgerät mit einer Nassfilmdicke von 100 μm auf Schwarz-Weiß-Deckungskarten appliziert.

**Tabelle 6a:** Farbmessung auf weißem Untergrund

| Beispiel/ Vergleichsbeispiel | L* 25° | L* 45° | L* 75° |
|---|---|---|---|
| Beispiel 8 | 96,6 | 94,5 | 94,7 |
| Vergleichsbeispiel 2 | 78,0 | 75,2 | 75,8 |
| Helio Beit UN 101 | 96,9 | 95,8 | 96,1 |

**Tabelle 6b:** Farbmessung auf schwarzem Untergrund

| Beispiel/ Vergleichsbeispiel | L* 25° | L* 45° | L* 75° |
|---|---|---|---|
| Beispiel 8 | 93,8 | 91,6 | 91,9 |
| Vergleichsbeispiel 2 | 77,3 | 74,4 | 75,0 |
| Helio Beit UN 101 | 96,3 | 92,3 | 92,7 |

Im Unterschied zu dem Pigment aus Vergleichsbeispiel 2 ist deutlich zu erkennen, dass das erfindungsgemäße Effektpigment aus Beispiel 8 den Farbton der weißen Farbpaste nur wenig beeinflusst.

**IIm Bestimmung der mittleren Cu-Auswaschrate gemäß DIN EN ISO 15181**

Ziel der Bestimmung ist die Beurteilung der Auswaschrate an Kupferionen von Antifouling-Beschichtungen.

Das Verfahren gemäß der DIN EN ISO 15181 wird zum Bestimmen des Gehaltes an unter anderem Kupfer unter festgelegten Laborbedingungen und zum Berechnen der Auswaschrate des Kupfers aus der Beschichtung angewendet.

Mit einer Antifouling-Beschichtung beschichtete Prüfzylinder wurden zusammen mit Bezugszylindern in einen Vorratstank in fließendes künstliches Meerwasser getaucht. In festgelegten Zeitabständen wurden die Zylinder entnommen und über eine definierte Zeitspanne in einzelnen Behältern zum Messen der Auswaschrate dem gleichen künstlichen Meerwasser ausgesetzt, bevor sie in den Vorratstank zurückgebracht wurden. Die Konzentration des Biozids, das in das Wasser der einzelnen Behälter zum Messen der Auswaschrate abgegeben wurde, wurde dann bestimmt. Dieser Vorgang wurde in definierten Zeitabständen wiederholt, so dass die Auswaschrate des Biozids berechnet werden konnte.

Die mittlere Kupfer-Auswaschrate von Tag 21 bis zum letzten Tag der Prüfung, in diesem Fall bis zum Tag 45 wurde nach folgender Gleichung berechnet:

$$R_{21,45} = \frac{\sum \frac{(R_i - R_j)}{2}(j-i)}{\sum (j-i)}$$

wobei

$R_{21,45} =$ mittlere Kupferauswaschrate von Tag 21 bis Tag 45

$i$ und $j =$ die Zeit, in Tagen, die seit dem Beginn der Prüfung für jedes Paar von aufeinander folgenden Tagen der Prüfung, insbesondere 21 und 45 vergangen sind.

$R_i$ und $R_j =$ die mittleren Kupfer-Auswaschraten für jeden Satz von drei Prüfzylindern, in $\mu g*cm^{-2}*d^{-1}$ für jedes Paar von aufeinander folgenden Tagen der Prüfung. In unserem Fall vom Tag (i) 21 bis zum Tag (j) 45.

Die Messung der Kupferkonzentration in künstlichem Meerwasser für die jeweiligen Proben erfolgte mittels Atomabsorptionsspektrometer (240FS AA, Fa. Agilent Technologies). Hierzu wurden die erhaltenen Probelösungen mit Salpetersäure angesäuert und vermessen.

Zur Bestimmung der mittleren Kupfer-Auswaschrate wurden die jeweiligen Pigmente in der kolophoniumharzbasierenden Antifouling-Beschichtungen gemäß anwendungstechnischem Beispiel 1 anstelle des dort verwendeten Pigments gemäß Beispiel 1 eingearbeitet. Die Pigmentierungshöhe in Tabelle 7 ist in Gew.-%, bezogen auf das Gesamtgewicht der Antifouling-Beschichtung, angegeben.

**Tabelle 7:** mittlere Kupfer-Auswaschrate $R_{21,45}$

| Beispiel/ Vergleichsbeispiel/ Pigmentierungshöhe | $R_{21,45}$ [$\mu$g/cm$^2$] |
|---|---|
| Beispiel 1 / 20 Gew.-% | 16 |
| Beispiel 2 / 20 Gew.-% | 5 |
| Beispiel 3 / 20 Gew.-% | 22 |
| Vergleichsbeispiel 2/ 20 Gew.-% | 19 |
| Sigma ECO Fleet 530 Redbrown | 7 |

Trotz des geringeren Gehalts an kupferhaltiger Beschichtung weisen die erfindungsgemäßen Effektpigmente eine vergleichbare mittlere Kupfer-Auswaschrate auf wie herkömmliche in Antifouling-Beschichtungen eingesetzte Pigmente.

**IIn Bestimmung der Leachingrate in synthetischem Meerwasser**

Die Leachingrate in synthetischem Meerwasser gibt an, wie viel Kupferionen innerhalb von 6h aus einer Suspension des erfindungsgemäßen Effektpigmentes an das Meerwasser bei 20°C abgegeben werden. Ziel sollte sein, eine möglichst geringe Menge an Cu-Ionen an das Meerwasser abzugeben, die jedoch immer noch ausreichend genug ist, um als entsprechendes Biozid einen Bewuchs der jeweiligen Oberfläche zu verhindern.

Hierzu wurde künstliches Meerwasser nach DIN 50904 hergestellt.

100g einer 4Gew.-%igen Pigmentsuspension des künstlichen Meerwassers wurden in eine 250ml Duranglasflasche gefüllt und bei 250U/min in einem Bühler KM-2 Schüttelaggregat 6h lang geschüttelt. Anschließend ließ man die Suspension ½ h absetzen und im Anschluss daran wurde die Suspension über einen Blaubandfilter abfiltriert.

Das Filtrat wurde über mittels Atomabsorptionsspektrometer (240FS AA, Fa. Agilent Technologies) gegen Matrix angepasste Standards vermessen.

**Tabelle 8**: Leachingrate in künstlichem Meerwasser

| Beispiel/ Vergleichsbeispiel | Leaching in Seewasser | BET |
|---|---|---|
| | Cu [ppm] | [$m^2$/g] |
| Beispiel 1 | 10 | 3,9 |
| Beispiel 2 | 10 | 2,9 |
| Beispiel 4 | 6 | 4,0 |
| Beispiel 7 | <1 | 3,8 |
| Beispiel 8 | <1 | 3,8 |
| Vergleichsbeispiel 2 | 16 | 0,7 |
| Vergleichsbeispiel 3 | 73 | 0,5 |
| Vergleichsbeispiel 4 | 44 | 0,7 |
| Vergleichsbeispiel 5 | 45 | 1,4 |

Der Tabelle ist deutlich zu entnehmen, dass die erfindungsgemäßen Effektpigmente deutlich geringere Kupfermengen an das Meerwasser abgeben als die Vergleichsbeispiele, obwohl die spezifischen Oberflächen der Vergleichsbeispiele größer sind. Gleichzeitig kann durch die jeweilige Modifikation der aufgebrachten kupferhaltigen Beschichtung das Cu-Leachingverhalten beeinflusst werden. Je nach Bedarf kann somit die Cu-Abgabe des Pigmentes eingestellt werden.

### III Anwendungstechnische Beispiele

In den nachfolgenden Antifouling-Beschichtungen wurden die erfindungsgemäßen kupferhaltigen Pigmente verwendet, die nach einem der vorstehenden Beispiele hergestellt wurden.

**Anwendungstechnisches Beispiel 1:**Antifouling-Beschichtung für den marinen Bereich, CDP

| Name | Produktname | Gew.-% | Hersteller/ Lieferant |
|---|---|---|---|
| | | | |
| Kolophoniumharz | Safitack GR WWB | 26,00 | Safic |
| Zinkoxid | Heucophos ZCP Plus | 7,00 | Heubach |
| Talkum | Micro Talkum N | 6,60 | Azemuth |
| Titandioxid | Finntitan RF 5 | 6,00 | Kemira |
| Pigment gemäß Beispiel 1 | | 32,00 | |
| Netz-/Dispergieradditiv | Disperbyk 101 | 1,40 | Byk |
| Co-Biozid | Zink Omadine Pulver | 4,00 | Arch |
| Lösemittel | Xylol | 11,00 | Merck |
| Lösemittel | Methylisobutylketon | 6,00 | Merck |

Das Pigment aus Beispiel 1 kann in einem Bereich von 10,0 bis 35,0 Gew.-%, bezogen auf das Gesamtgewicht der Antifouling-Beschichtung, eingesetzt werden. Der Ausgleich auf 100 Gew.-% der Antifouling-Beschichtung kann mit Lösemittel erfolgen.

Das Kolophoniumharz wurde zusammen mit dem Netz-/Dispergieradditiv in einem Behälter vorgelegt und homogenisiert. Unter Rühren wurden die Komponenten Zinkoxid, Talkum sowie Titandioxid hinzu gegeben und 15 min bei einer Geschwindigkeit von 14m/s dispergiert. Dieser Vorgang erfolgte unter ständiger Kühlung, um ein zu starkes Aufheizen des Mahlgutes zu vermeiden. Anschließend wurde das Pigment aus Beispiel 1 zusammen mit dem Co-Biozid sowie den Lösemitteln unter Rühren zugegeben. Nach einer Überprüfung der Homogenität anhand eines Rakelabzugs wurde die Antifouling-Beschichtung in ein passendes Gebinde abgefüllt.

**Anwendungstechnisches Beispiel 2:** Antifouling-Beschichtung für Yacht-Beschichtungen, CDP

| Name | Produktname | Gew.-% | Hersteller/ Lieferant |
|------|-------------|--------|----------------------|
| | | | |
| Kolophoniumharz | Rokrasin 1880 | 33,00 | Rokra |
| Zinkoxid | Heucophos ZCO Plus | 6,00 | Heubach |
| Talkum | Finntalc M40 | 5,00 | Mondo |
| Titandioxid | Kronos 2044 | 5,00 | Kronos |
| Pigment gemäß Beispiel 3 | | 28,00 | |
| Netz-/Dispergieradditiv | Disperbyk P 104 | 2,00 | Byk-Chemie |
| Dichloroctylisothiazolinon | Sea Nine 211 N | 4,00 | Dow |
| Lösemittel | Xylol | 8,00 | Jäckle |
| Lösemittel | Methylisobutylketon | 10,00 | Jäckle |

Das Pigment aus Beispiel 3 kann in einem Bereich von 10,0 bis 40,0 Gew.-%, bezogen auf das Gesamtgewicht der Antifouling-Beschichtung, eingesetzt werden. Der Ausgleich auf 100 Gew.-% der Antifouling-Beschichtung kann mit Lösemittel erfolgen.

Das Kolophoniumharz wurde mit dem Netz-/Dispergieradditiv in einem Behälter vorgelegt und homogenisiert. Unter Rühren wurden die Komponenten Zinkoxid, Talkum und Titandioxid zugegeben und 20min bei 16 m/s dispergiert. Nach Überprüfung der Kornfeinheit wurde das Zinkoxid sowie das Dichloroctylisothiazolinon bei niedriger Drehzahl (3m/s)eingerührt und anschließend mit Xylol und Methylisobutylketon auf eine Viskosität von 2,6 Pa·s eingestellt. Nach einer erneuten Homogenisierung wurde die Antifouling-Beschichtung in ein passendes Gebinde umgefüllt.

**Anwendungstechnisches Beispiel 3:**Antifouling-Beschichtung für den marinen Bereich, CDP

| Name | Produktname | Gew.-% | Hersteller/ Lieferant |
|------|-------------|--------|----------------------|
| | | | |
| Kolophoniumharz | Foral 85-E | 26,00 | Eastman |
| Zinkoxid | Heucophos ZPZ 09 | 7,00 | Heubach |
| Talkum | Mikrotalkum AT extra | 6,60 | Omya |
| Titandioxid | Hombitan R 610 K | 6,00 | Sachtleben |
| Pigment gemäß Beispiel 4 | | 25,00 | |
| Netz-/Dispergieradditiv | Disperbyk 142 | 1,40 | Byk |
| Lösemittel | Xylol | 11,00 | Merck |
| Lösemittel | MIBK | 6,00 | Merck |

Das Pigment aus Beispiel 4 kann in einem Bereich von 9,00 bis 35,0 Gew.-%, bezogen auf das Gesamtgewicht der Antifouling-Beschichtung, eingesetzt werden. Der Ausgleich auf 100 Gew.-% der Antifouling-Beschichtung kann mit Lösemittel erfolgen.

Das Kolophoniumharz wurde zusammen mit dem Netz-/Dispergieradditiv in einem Behälter vorgelegt. Unter Rühren wurden die Komponenten Zinkoxid, Talkum sowie Titandioxid hinzu gegeben und 15 min bei einer Geschwindigkeit von 14m/s dispergiert. Dieser Vorgang erfolgte unter ständiger Kühlung, um ein zu starkes Aufheizen des Mahlgutes zu vermeiden. Anschließend wurde das Pigment aus Beispiel 4 zusammen mit dem Co-Biozid sowie den Lösemitteln unter Rühren zugegeben. Nach einer Überprüfung der Homogenität wurde die Antifouling-Beschichtung in ein passendes Gebinde abgefüllt.

**Anwendungstechnisches Beispiel 4:** Antifouling-Beschichtung für den marinen Bereich, CDP

| Name | Produktname | Gew.-% | Hersteller/ Lieferant |
|---|---|---|---|
| | | | |
| Kolophoniumharz | Rokrasin 1880 | 32,00 | Rokra |
| Zinkoxid | Heucophos ZCP Plus | 5,00 | Heubach |
| Talkum | Micro Talkum N | 6,60 | Azemuth |
| Titandioxid | Finntitan RF 5 | 6,00 | Kemira |
| Pigment gemäß Beispiel 7 | | 36,00 | |
| Netz-/Disperg ieradd itiv | Disperbyk 101 | 1,40 | Byk |
| Lösemittel | Xylol | 7,00 | Merck |
| Lösemittel | Methylisobutylketo n | 6,00 | Merck |

Das Pigment aus Beispiel 7 kann in einem Bereich von 10,0 bis 40,0 Gew.-%, bezogen auf das Gesamtgewicht der Antifouling-Beschichtung, eingesetzt werden. Der Ausgleich auf 100 Gew.-% der Antifouling-Beschichtung kann mit Lösemittel erfolgen.

Das Kolophoniumharz wurde zusammen mit dem Netz-/Dispergieradditiv in einem Behälter vorgelegt und homogenisiert. Unter Rühren wurden die Komponenten Zinkoxid, Talkum sowie Titandioxid hinzu gegeben und 15 min bei einer Geschwindigkeit von 14 m/s dispergiert. Dieser Vorgang erfolgte unter ständiger Kühlung, um ein zu starkes Aufheizen des Mahlgutes zu vermeiden. Anschließend wurde das Pigment aus Beispiel 7 zusammen mit den Lösemitteln unter Rühren hinzu gegeben. Nach Überprüfung der Homogenität anhand eines Rakelabzugs wurde die Antifouling-Beschichtung in ein passendes Gebinde abgefüllt.

**Anwendungstechnisches Beispiel 5**: Antifouling-Beschichtung für den marinen Bereich, CDP

| Name | Produktname | Gew.-% | Hersteller/ Lieferant |
|---|---|---|---|
| | | | |
| Kolophoniumharz | Safitack GR WWB | 11,00 | Safic |
| Kolophoniumharz | Foral 85-E | 15,00 | Eastman |
| Zinkoxid | Heucophos ZCP Plus | 7,00 | Heubach |
| Talkum | Micro Talkum AT extra | 6,60 | Azemuth |
| Titandioxid | Kronos 2044 | 6,00 | Kronos |
| Pigment gemäß Beispiel 8 | | 28,00 | |
| Netz-/Dispergieradditiv | Disperbyk 101 | 1,40 | Byk |
| Co-Biozid | Zink Omadine | 4,00 | Dow |

(fortgesetzt)

| Name | Produktname | Gew.-% | Hersteller/ Lieferant |
|---|---|---|---|
| | Pulver | | |
| Dichloroctylisathiazolinon | Sea Nine 211 N | 4,00 | |
| Lösemittel | Xylol | 11,00 | Merck |
| Lösemittel | Methylisobutylketon | 6,00 | Merck |

Das Pigment aus Beispiel 8 kann in einem Bereich von 5,0 bis 35,0 Gew.-%, bezogen auf das Gesamtgewicht der Antifouling-Beschichtung, eingesetzt werden. Der Ausgleich auf 100 Gew.-% der Antifouling-Beschichtung kann mit Lösemittel erfolgen.

Die Kolophoniumharze wurden zusammen mit dem Netz-/Dispergieradditiv in einem Behälter vorgelegt und homogenisiert. Unter Rühren wurden die Komponenten Zinkoxid, Talkum sowie Titandioxid hinzu gegeben und 15 min bei einer Geschwindigkeit von 14 m/s dispergiert Dieser Vorgang erfolgte unter ständiger Kühlung, um eine zu starkes Aufheizen des Mahlgutes zu vermeiden. Anschließend wurde das Pigment aus Beispiel 8 zusammen mit den Co-Bioziden sowie den Lösemitteln unter Rühren hinzu gegeben. Nach Überprüfung der Homogenität anhand eines Rakelabzugs wurde die fertige Antifouling-Beschichtung in ein passendes Gebinde abgefüllt.

**IV Freilandtest der Pigmente**

**IVa Süßwasser**

Zur bewuchshemmenden Beurteilung der erfindungsgemäßen Effektpigmente und Pigmente der Vergleichsbeispiele in Süßwasser wurden die jeweiligen Pigmente gemäß IIk Farbtonkonstanz in einen Lack eingearbeitet, auf Aluminiumbleche appliziert und gelagert. Anschließend wurden die Bleche für ein Jahr in dem belebten Fluss Pegnitz in Güntersthal (91235 Hartenstein, Deutschland) in 50 cm Tiefe ausgesetzt. Nach Beendigung der Testphase erfolgte eine manuelle Reinigung der Bleche unter fließendem Wasser. Die Bleche wurden anschließend visuell nach Bewuchs und Haftung beurteilt.

**Tabelle 9**

| Beispiel | Bewuchs | Haftung | Gesamteindruck |
|---|---|---|---|
| Beispiel 2 | 1 | 2 | 1 |
| Beispiel 7 | 1 | 1 | 1 |
| Beispiel 8 | 2 | 1 | 2 |
| Sigma Eco Fleet 530 Redbrown | 5 | 5 | 5 |
| 0= sehr gut 5= sehr schlecht | | | |

**IVb Salzwasser**

Zur bewuchshemmenden Beurteilung der erfindungsgemäßen Effektpigmente und Pigmente der Vergleichsbeispiele in Salzwasser wurden die jeweiligen Pigmente in einer Pigmentierungshöhe von 20 Gew.-%, bezogen auf das Gesamtgewicht der Antifouling-Beschichtung, gemäß IIk Farbtonkonstanz in einen Lack eingearbeitet, auf Aluminiumbleche appliziert und gelagert. Anschließend wurden die Bleche für bis zu ein Jahr vor Singapur im Meer ausgesetzt. Es wurden jeweils zwei identisch lackierte und pigmentierte Bleche im Meerwasser gelagert, wobei eines der Bleche einer höheren UV-Belastung durch längere Sonneneinstrahlung ausgesetzt war (Vorderseite). Gleichzeitig wurde das identisch lackierte und pigmentierte Blech umgekehrt im Meerwasser ausgesetzt (Rückseite). Die Bewertung erfolgte in Anlehnung an ASTM D 3623-78a über eine photographische Auswertung der Bleche. Hierzu wurden die Bleche aus dem Meerwasser herausgenommen und die untere Hälfte mit steigendem Wasserdruck abgespült. Die Bleche wurden nach jedem Reinigungsvorgang digital erfasst und photographisch analysiert. Bei tierischen Ansiedelungen wurden die einzelnen Tiere gezählt.

**Tabelle 10a:** Ergebnisse nach einem halben Jahr

| Beispiel | Schleim | | | | Algen | | | | Posthörnchenwürmer | | | |
|---|---|---|---|---|---|---|---|---|---|---|---|---|
| | oben | unten | 50 psi | 100 psi | oben | unten | 50 psi | 100 psi | oben | unten | 50 psi | 100 psi |
| Beispiel 4 (Vorderseite) | 98 | 98 | 0 | 0 | 1 | 2 | 0 | 0 | 1 | 0 | 0 | 0 |
| Beispiel 7 (Vorderseite) | 2 | 4 | 3 | 3 | 94 | 91 | 96 | 44 | 4 | 5 | 0 | 0 |
| Beispiel 7 (Rückseite) | 3 | 4 | 3 | 0 | 96 | 94 | 78 | 0 | 1 | 2 | 5 | 0 |
| Beispiel 8 (Vorderseite) | 78 | 74 | 73 | 39 | 11 | 27 | 13 | 10 | 11 | 9 | 5 | 2 |
| Beispiel 8 (Rückseite) | 16 | 37 | 20 | 10 | 84 | 48 | 72 | 17 | 0 | 13 | 8 | 0 |
| Sigma Eco Fleet 530 Redbrown (Vorderseite) | 42 | 15 | 20 | 0 | 58 | 75 | 48 | 2 | 0 | 0 | 0 | 0 |

| Beispiel | Weichtiere | | | | Seepocken | | | |
|---|---|---|---|---|---|---|---|---|
| | oben | unten | 50 psi | 100 psi | oben | unten | 50 psi | 100 psi |
| Beispiel 4 (Vorderseite) | 0 | 0 | 0 | 0 | 0 | 0 | 0 | 0 |
| Beispiel 7 (Vorderseite) | 0 | 0 | 0 | 0 | 0 | 0 | 0 | 0 |
| Beispiel 7 (Rückseite) | | 0 | 0 | 0 | 0 | 0 | 0 | 0 |
| Beispiel 8 (Vorderseite) | 0 | 0 | 0 | 0 | 0 | 0 | 0 | 0 |
| Beispiel 8 (Rückseite) | 0 | 0 | 0 | 0 | 0 | 0 | 0 | 0 |
| Sigma Eco Fleet 530 Redbrown (Vorderseite) | 0 | 0 | 0 | 0 | 0 | 0 | 0 | 0 |

**Tabelle 10b:** Ergebnisse nach einem Jahr

| Beispiel | Schleim | | | | Algen | | | | Posthörnchenwürmer | | | |
|---|---|---|---|---|---|---|---|---|---|---|---|---|
| | oben | unten | 50 psi | 100 psi | oben | unten | 50 psi | 100 psi | oben | unten | 50 psi | 100 psi |
| Beispiel 1 (Rückseite) | 60 | 2 | 1 | 0 | 36 | 98 | 8 | 0 | 2 | 2 | 0 | 0 |
| Beispiel 2 (Rückseite) | 22 | 0 | 1 | 05 | 73 | 91 | 87 | 85 | 2 | 9 | 12 | 15 |
| Beispiel 3(Rückseite) | 5 | 2 | 2 | 2 | 72 | 67 | 78 | 76 | 21 | 31 | 20 | 22 |
| Beispiel 4(Rückseite) | 83 | 0 | 0 | 0 | 3 | 82 | 74 | 79 | 8 | 18 | 26 | 21 |
| Sigma Eco Fleet 530 Redbrown | 12 | 5 | 5 | 0 | 73 | 95 | 93 | 0 | 9 | 0 | 0 | 0 |

(Rückseite)

| Beispiel | Weichtiere | | | | Seepocken | | | |
|---|---|---|---|---|---|---|---|---|
| | oben | unten | 50 psi | 100 psi | oben | unten | 50 psi | 100 psi |
| Beispiel 1 (Rückseite) | 0 | 0 | 0 | 0 | 2 | 0 | 0 | 0 |
| Beispiel 2 (Rückseite) | 0 | 0 | 0 | 0 | 3 | 0 | 0 | 0 |
| Beispiel 3 (Rückseite) | 0 | 0 | 0 | 0 | 2 | 0 | 0 | 0 |
| Beispiel 4 (Rückseite) | 0 | 0 | 0 | 0 | 4 | 0 | 0 | 0 |
| Sigma Eco Fleet 530 Redbrown (Rückseite) | 0 | 0 | 0 | 0 | 0 | 0 | 0 | 0 |

Mit den erfindungsgemäßen Effektpigmenten pigmentierte Antifouling-Beschichtungen zeigten eine vergleichbare oder sogar bessere bewuchshemmende Wirkung als eine kommerziell erhältliche Antifouling-Beschichtung. Hierbei ist zu bemerken, dass die kommerziell erhältliche Antifouling-Beschichtung neben sphärischem Kupfer(I)oxid ein weiteres Co-Biozid umfasst. Die mit den erfindungsgemäßen Effektpigmenten versehenen Antifouling-Beschichtungen enthielten kein Co-Biozid, was sich in einer teilweise erhöhten Schleimbildung bemerkbar machte. Dennoch waren auch nach einem Jahr keine höheren Lebewesen auf diesen Blechen zu finden. Bei der photographischen Auswertung wurde das visuell sichtbare Ergebnis nach dem Reinigungsvorgang nicht immer korrekt wiedergegeben, was an den Hell-/ Dunkelkontrasten von beispielsweise Beschädigungen des Blechs lag. Daher sind in den obigen Tabellen teilweise steigende Werte nach einem Reinigungsvorgang zu finden, obwohl das entsprechende Blech keine Rückstände mehr aufwies.

**Patentansprüche**

1. Effektpigment umfassend ein plättchenförmiges nichtmetallisches Substrat und eine kupferhaltige Beschichtung,
   **dadurch gekennzeichnet,**
   **dass** die mittlere Teilchengröße $D_{50}$ des Effektpigments mehr als 5 μm beträgt und der Kupfergehalt des Effektpigments in einem Bereich von 3 bis 70 Gew.-%, bezogen auf das Gesamtgewicht des Effektpigments, liegt,
   wobei die kupferhaltige Beschichtung aus der Gruppe, bestehend aus Kupfer(0), Kupfer(I)oxid, Kupfer(I)hydroxid, Kupfer(II)oxid, Kupfer(II)hydroxid, Kupfer(I)chlorid, Kupfer(II)chlorid, Kupfer(I)bromid, Kupfer(II)bromid, Kupfer(I)iodid, Kupfer(II)acetat, Kupfer(II)acetat Monohydrat, Kupfer(II)hydroxidcarbonat, Kupfer(II)citrat, Kupfer(II)nitrat, Kupfer(II)sulfat Pentahydrat, Kupfer(I)sulfid, Kupfer(II)sulfid, Kupferthiocyanat, Kupferoxychlorid, Kupfer(II)tartrat und Mischungen davon, ausgewählt ist,
   und/oder wobei die kupferhaltige Beschichtung eine Verbindung der allgemeinen Summenformel (I)

$$Cu_wM_x(OH)_yCl_z \cdot nH_2O \qquad (I)$$

   ist, wobei M für Zink, Nickel, Magnesium, Cobalt oder Eisen stehen kann, w aus einem Bereich von 0,5 bis 5, x aus einem Bereich von 0 bis 2, y aus einem Bereich von 1 bis 8, z aus einem Bereich von 1 bis 2 und n für einen Wert zwischen 0 und 10 ausgewählt werden kann, mit der Maßgabe, dass (y + z) = (w · Oxidationstufe von Cu + x · Oxidationstufe von M) ist.

2. Effektpigment nach Anspruch 1,
   **dadurch gekennzeichnet,**
   **dass** die spezifische Kupferoberfläche des Effektpigments, definiert als Quotient aus Kupfergehalt [Gew.-%] und spezifischer Oberfläche nach BET [m²/g],

$$\frac{Kupfergehalt \; [Gew.-\%]}{BET \; [\frac{m^2}{g}]}$$

   kleiner 60 Gew.-%·g·M⁻²ist.

3. Effektpigment nach einem der vorstehenden Ansprüche,
   **dadurch gekennzeichnet,**
   **dass** das Effektpigment einen Chloridgehalt von größer als 0,1 Gew.-%, bezogen auf das Gesamtgewicht des Effektpigments, aufweist.

**4.** Effektpigment nach einem der vorstehenden Ansprüche,
**dadurch gekennzeichnet,**
**dass** das nichtmetallische plättchenförmige Substrat aus der Gruppe, bestehend aus natürlichen Glimmerplättchen, synthetischen Glimmerplättchen, Glasplättchen, Siliziumdioxidplättchen, Aluminiumoxidplättchen und Mischungen hiervon, ausgewählt ist.

**5.** Effektpigment nach einem der vorhergehenden Ansprüche,
**dadurch gekennzeichnet,**
**dass** die kupferhaltige Beschichtung das plättchenförmige nichtmetallische Substrat vollständig umhüllt.

**6.** Effektpigment nach einem der vorhergehenden Ansprüche,
**dadurch gekennzeichnet,**
**dass** die kupferhaltige Beschichtung nasschemisch aufgebracht ist.

**7.** Effektpigment nach einem der vorhergehenden Ansprüche,
**dadurch gekennzeichnet,**
**dass** das Effektpigment unter Luftausschluss getrocknet und/oder kalziniert ist.

**8.** Effektpigment nach einem der vorhergehenden Ansprüche,
**dadurch gekennzeichnet,**
**dass** die Pigmentoberfläche des Effektpigments organisch-chemisch oberflächenmodifiziert ist.

**9.** Verfahren zur Herstellung eines Effektpigments nach einem der vorstehenden Ansprüche,
**dadurch gekennzeichnet,**
**dass** das Verfahren folgende Schritte umfasst:

(a1) Suspendieren von plättchenförmigem nichtmetallischen Substrat in einer wässrigen Lösung,
(b1) Zugeben einer Kupfersalzlösung und Abscheiden einer kupferhaltigen Beschichtung auf dem plättchenförmigen nichtmetallischen Substrat unter Erhalt des Effektpigments,
(c1) Filtrieren, optional Trocknen und/oder optional Kalzinieren des gemäß Schritt (b1) erhaltenen Effektpigments

oder
**dass** das Verfahren folgende Schritte umfasst:

(a2) Inkontaktbringen einer wässrigen Kupfersalzlösung und eines plättchenförmigen nichtmetallischen Substrats unter Bereitstellung einer Suspension,
(b2) Zugeben eines Kupferkomplexierungsmittels zu der in Schritt (a2) erhaltenen Suspension,
(c2) Zugeben eines Reduktionsmittels zu der Suspension aus Schritt (b2) unter Erhalt des Effektpigments,
(d2) Filtrieren, optional Trocknen und/oder optional Kalzinieren des gemäß Schritt (c2) erhaltenen Effektpigments.

**10.** Verwendung eines Effektpigments nach einem der Ansprüche 1 bis 8 in einer Antifouling-Beschichtung.

**11.** Antifouling-Beschichtung, die ein Effektpigment nach einem der Ansprüche 1 bis 8 enthält.


**Claims**

**1.** Effect pigment comprising a platelet-shaped non-metallic substrate and a copper-containing coating,
**characterised in that**
the mean particle size $D_{50}$ of the effect pigment is more than 5 $\mu$m and the copper content of the effect pigment lies within a range of 3 to 70 % by weight relative to the total weight of the effect pigment, wherein the copper-containing coating is selected from the group consisting of copper(0), copper(I) oxide, copper(I) hydroxide, copper(II) oxide, copper(II) hydroxide, copper(I) chloride, copper(II) chloride, copper(I) bromide, copper(II) bromide, copper(I) iodide, copper(II) acetate, copper(II) acetate monohydrate, copper(II) hydroxide carbonate, copper(II) citrate, copper(II) nitrate, copper(II) sulphate pentahydrate, copper(I) sulphide, copper(II) sulphide, copper thiocyanate, copper oxychloride, copper(II) tartrate and mixtures thereof,
and/or wherein the copper-containing coating is a compound of general empirical formula (I)

$$Cu_wM_x(OH)_yCl_z \cdot nH_2O \qquad (I)$$

where M may stand for zinc, nickel, magnesium, cobalt or iron, w may be selected from a range of 0.5 to 5, x from a range of 0 to 2, y from a range of 1 to 8, z from a range of 1 to 2 and n is a value between 0 and 10, provided that $(y + z) = (w \cdot$ oxidation state of Cu $+ x \cdot$ oxidation state of M$)$.

**2.** Effect pigment as claimed in claim 1,
**characterised in that**
the specific copper surface area of the effect pigment, defined as the quotient of copper content [% by weight] and specific surface area according to BET [$m^2$/g]

$$\frac{Copper\ content\ [\%\ weight]}{BET\ \left[\frac{m^2}{g}\right]}$$

is less than 60 % by weight·g·$m^{-2}$.

**3.** Effect pigment as claimed in one of the preceding claims,
**characterised in that**
the effect pigment has a chloride content greater than 0.1 % by weight relative to the total weight of the effect pigment.

**4.** Effect pigment as claimed in one of the preceding claims,
**characterised in that**
the non-metallic platelet-shaped substrate is selected from the group consisting of natural mica platelets, synthetic mica platelets, glass platelets, silicon dioxide platelets, aluminium oxide platelets and mixtures thereof.

**5.** Effect pigment as claimed in one of the preceding claims,
**characterised in that**
the copper-containing coating completely envelops the platelet-shaped non-metallic substrate.

**6.** Effect pigment as claimed in one of the preceding claims,
**characterised in that**
the copper-containing coating is applied wet chemically.

**7.** Effect pigment as claimed in one of the preceding claims,
**characterised in that**
the effect pigment is dried and/or calcined in the absence of air.

**8.** Effect pigment as claimed in one of the preceding claims,
**characterised in that**
the pigment surface area of the effect pigment is organic-chemically surface modified.

**9.** Method for producing an effect pigment as claimed in one of the preceding claims,
**characterised in that**
the method comprises the following steps:

(a1) suspending platelet-shaped non-metallic substrate in an aqueous solution,
(b1) adding a copper salt solution and depositing a copper-containing coating on the platelet-shaped non-metallic substrate to obtain the effect pigment,
(c1) filtering, optionally drying and/or optionally calcining the effect pigment obtained in step (b1),

or
the method comprises the following steps,

(a2) bringing an aqueous copper salt solution and a platelet-shaped non-metallic substrate into contact to provide a suspension,
(b2) adding a copper complexing agent to the suspension obtained in step (a2),

(c2) adding a reducing agent to the suspension from step (b2) to obtain the effect pigment,
(d2) filtering, optionally drying and/or optionally calcining the effect pigment obtained in step (c2).

10. Use of an effect pigment as claimed in one of claims 1 to 8 in an anti-fouling coating.

11. Anti-fouling coating which contains an effect pigment as claimed in one of claims 1 to 8.


**Revendications**

1. Pigment à effets comprenant un substrat non-métallique lamellaire et un revêtement contenant du cuivre, **caractérisé en ce que** la granulométrie moyenne $D_{50}$ du pigment à effets est supérieure à 5 $\mu$m et la teneur en cuivre du pigment à effets est compris dans une plage de 3 à 70 % en poids, par rapport au poids total du pigment à effets,
dans lequel le revêtement contenant du cuivre est choisi dans le groupe consistant en le cuivre(0), l'oxyde de cuivre(I), l'hydroxyde de cuivre(I), l'oxyde de cuivre(II), l'hydroxyde de cuivre(II), le chlorure de cuivre(I), le chlorure de cuivre(II), le bromure de cuivre(I), le bromure de cuivre(II), l'iodure de cuivre(I), l'acétate de cuivre(II), l'acétate de cuivre(II) monohydraté, l'hydroxycarbonate de cuivre(II), le citrate de cuivre(II), le nitrate de cuivre(II), le sulfate de cuivre(II) pentahydraté, le sulfure de cuivre(I), le sulfure de cuivre(II), le thiocyanate de cuivre, l'oxychlorure de cuivre, le tartrate de cuivre(II) et les mélanges de ceux-ci,
et/ou dans lequel le revêtement contenant du cuivre est un composé de formule brute (I)

$$Cu_wM_x(OH)_yCl_z.nH_2O \qquad (I)$$

dans laquelle M peut représenter le zinc, le nickel, le magnésium, le cobalt ou le fer, w est choisi dans une plage de 0,5 à 5, x dans une plage de 0 à 2, y dans une plage de 1 à 8, z dans une plage de 1 à 2 et n représente une valeur comprise entre 0 et 10, à la condition que (y+z) = (w . nombre d'oxydation de Cu + x . nombre d'oxydation de M).

2. Pigment à effets selon la revendication 1, **caractérisé en ce que** l'aire spécifique du cuivre du pigment à effets, définie par le rapport entre la teneur en cuivre [% en poids] et l'aire spécifique selon BET [m²/g],

$$Teneur \ en \ cuivre \ [\% \ en \ poids] \ / \ BET \ [m²/g]$$

est inférieur à 60 % en poids.g.m⁻².

3. Pigment à effets selon l'une des revendications précédentes, **caractérisé en ce que** le pigment à effets présente une teneur en chlorure supérieure à 0,1 % en poids, par rapport au poids total du pigment à effets.

4. Pigment à effets selon l'une des revendications précédentes, **caractérisé en ce que** le substrat lamellaire non-métallique est choisi dans le groupe consistant en les lamelles de mica naturel, les lamelles de mica synthétique, les lamelles de verre, les lamelles de dioxyde de silicium, les lamelles d'oxyde d'aluminium et les mélanges de ceux-ci.

5. Pigment à effets selon l'une des revendications précédentes, **caractérisé en ce que** le revêtement métallique enveloppe complètement le substrat non-métallique lamellaire.

6. Pigment à effets selon l'une des revendications précédentes, **caractérisé en ce que** le revêtement contenant du cuivre est appliqué par voie humide.

7. Pigment à effets selon l'une des revendications précédentes, **caractérisé en ce que** le pigment à effets est séché et/ou calciné à l'abri de l'air.

8. Pigment à effets selon l'une des revendications précédentes, **caractérisé en ce que** la surface pigmentaire du pigment à effets subit une modification chimique organique en surface.

9. Procédé de fabrication d'un pigment à effets selon l'une des revendications précédentes, **caractérisé en ce que** le procédé comprend les étapes suivantes :

(a1) mise en suspension d'un substrat non-métallique lamellaire dans une solution aqueuse,

(b1) addition d'une solution d'un sel de cuivre et dépôt d'un revêtement contenant du cuivre sur le substrat non-métallique lamellaire pour obtenir le pigment à effets,

(c1) filtration, éventuellement séchage et/ou éventuellement calcination du pigment à effets obtenu selon l'étape (b1)

ou

**en ce que** le procédé comprend les étapes suivantes :

(a2) mise en contact d'une solution aqueuse d'un sel de cuivre et d'un substrat non-métallique lamellaire, pour obtenir une suspension,

(b2) addition d'un complexant du cuivre à la suspension obtenue dans l'étape (a2),

(c2) addition d'un réducteur à la suspension de l'étape (b2) pour obtenir le pigment à effets,

(d2) filtration, éventuellement séchage et/ou éventuellement calcination du pigment à effets obtenu selon l'étape (c2).

**10.** Utilisation d'un pigment à effets selon l'une des revendications 1 à 8 dans un revêtement anti-salissures.

**11.** Revêtement anti-salissures qui contient un pigment à effets selon l'une des revendications 1 à 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0677989 B1
- EP 0427858 A1
- WO 2004092283 A2
- US 7147921 B2
- US 20040197322 A1
- EP 2246395 A1
- WO 2011010663 A1
- JP 01213368 A
- FR 2937043 A1
- WO 2010125323 A1
- JP 54047730 A
- WO 0160628 A2
- EP 1479730 A1
- US 6616745 B1

**In der Beschreibung aufgeführte Nicht-Patentliteratur**

- **R. KÄTSCHER ; J. RANKE ; M. BERGENTHAL ; J. WARRELMANN.** *Vorstudie zum Bewuchsschutz für Seeschiffe,* 02. Januar 1999, 5
- Lackformulierung und Lackrezeptur. Vincentz Verlag, 2005, 39
- *Progress in Organic Coatings,* 2004, vol. 50, 75-104
- *Umweltbundesamt,* 53-54